# EUROPEAN PATENT SPECIFICATION

(11) **EP 2 536 068 B1**
(45) Date of publication and mention of the grant of the patent: **13.08.2014**
(21) Application number: 11004989.7
(22) Date of filing: 18.06.2011
(51) Int. Cl.: H04L 12/28, H04L 12/24

(54) **Virtual subscriber management**
Virtuelle Teilnehmerverwaltung
Gestion virtuelle d'abonné

(43) Date of publication of application: 19.12.2012
(73) Proprietor: Deutsche Telekom AG, 53113 Bonn (DE)
(72) Inventor: Giese, Christian, 64347 Griesheim (DE); Hamacher, Peter, 64380 Roßdorf (DE); Wolff, Christian, 64807 Dieburg (DE)
(74) Representative: 2K Patentanwälte Blasberg Kewitz & Reichel

(56) References cited:
- WO-A1-2010/030437
- WO-A1-2010/145347
- US-A1- 2010 208 593
- US-A1- 2011 116 376

## Description

### Field of the Invention

Virtual Broadband Remote Access Server (BRAS) Cluster comprising at least two BRAS, each of the BRAS comprises a Data Plan, Control Plane, Management Plane.

### Background of Invention

Whenever the term "IP" is used within this document, it relates to IPv4 and IPv6. Especially, if no explicit exclusion is made, all mentioned requirements apply to both L3 protocols. Whenever the term "customer sessions" is used, "PPPoE sessions" are meant. The usage of SNMP stands for SNMPv3.

Whenever the term "stateful" is used within this document, it means that all protocols and mechanisms, which are required to keep a customer session up, connected and the used services running in an end-to-end manner, should be synchronized between the participating BRAS-chassis.

Single-BRAS is the term used for the description of the today running single-system BRAS solution. In this architecture the BRAS redundancy is limited to eventually existing in-the-box mechanisms (for instance two redundant control cards in the one-system BRAS). Additional, to protect against link failure, connection to different neighbour LER systems is a valid option (dual-attachment towards Backbone). And still, complete BRAS outage can neither be compensated nor be hidden from the end customer.

Subscriber Management is achieved thru the usage and the combination of various BRAS functionality, including AAA (Authentication, Authorization and Accounting), policy enforcement, products and services implementation and enforcement.

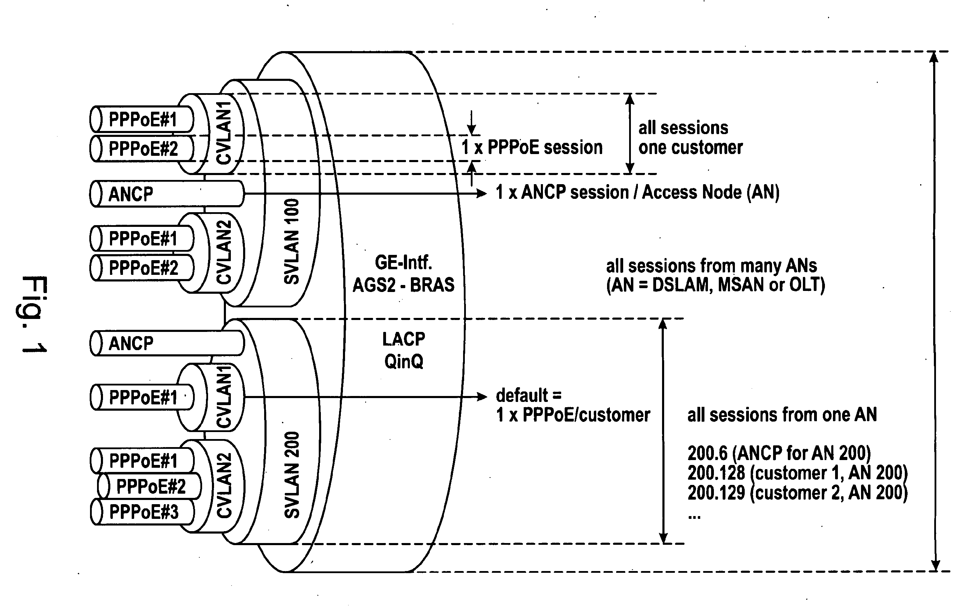

Valid physical interfaces for the BRAS redundancy solution are Gigabit-Ethernet (GE) and 10-Gigabit-Ethernet (10GE). Connection into the customer aggregation area is achieved by using GE interfaces. Fig. 1 summarizes the mapping of customer traffic flows to physical interfaces on the BRAS. The whole IP traffic of one AN (GE-DSLAM, MSAN or OLT) is transported over a dedicated SVLAN towards the L3 demarcation point BRAS. A separate ANCP-VLAN is used (one per AN) for controlling the associated customer flows.

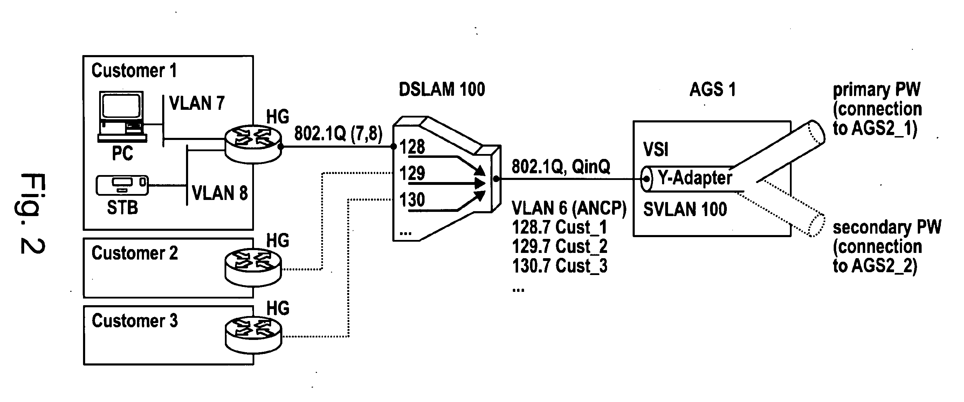

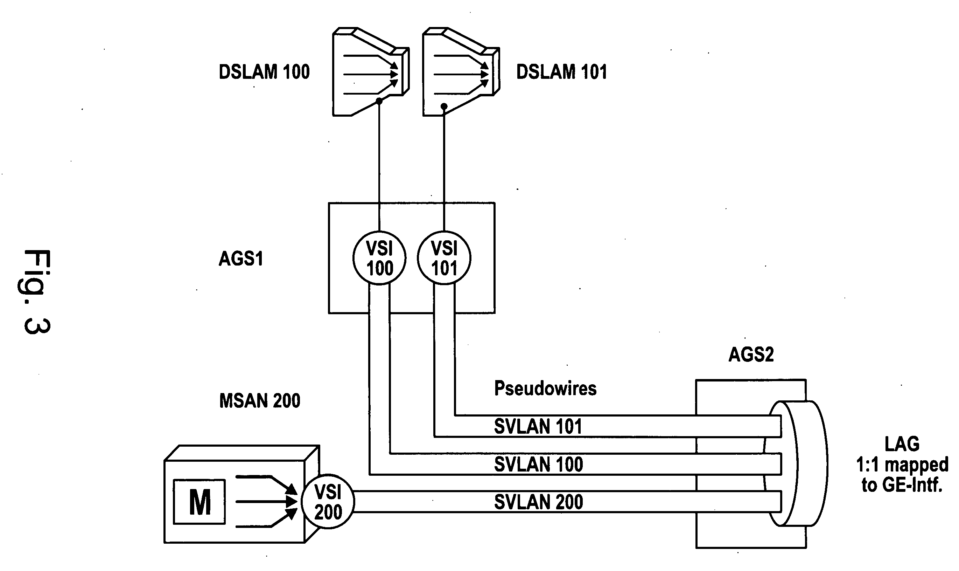

Fig. 2 illustrates the PW-based redundancy implementation for GE-DSLAM environments. So in the end, one GE physical interface on the BRAS aggregates multiple, even different types of ANs (Fig. 3).

One logical access interface (=LAG interface) is 1:1 mapped to one corresponding physical GE interface. The logical LAG interface (LACP activated GE) is the PPPoE termination point of all customer sessions coming from multiple ANs.

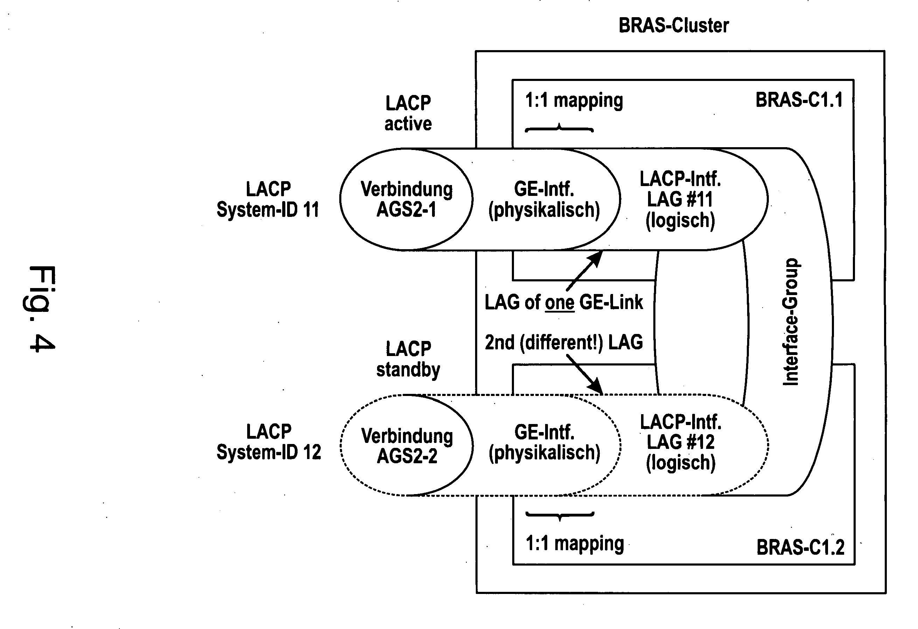

An interface-group (IG) (see Fig. 4) builds a redundant interface pair (active/standby) of LAGs residing on different BRAS-chassis. At a given time only the active link is used for the transport of the customer PPPoE sessions. Over the connecting crosslink all required state and session information is sync'ed towards standby link.

US 2010/0 208 593 discloses methods and apparatuses for inter-working a first protocol, e.g., Provider Backbone Bridge Traffic Engineering (PBB-TE), that provides Ethernet carrier-class traffic engineering, with a second protocol, e.g., Virtual Private LAN Service, that emulates local area network (LAN) service. Unicast, multicast, and broadcast transmissions are enabled across an Ethernet aggregation network and an MPLS core network. Dual homing protection and end-to-end traffic engineering with adjustable granularity are also provided. These capabilities are not available with traditional PBB-TE networks or with an interworking between PBB and VPLS that has been previously proposed. Embodiments of the invention terminate a PBB-TE tunnel at a user-facing provider edge (UPE) node and attach instance service identifiers (ISIDs) to different virtual switching instances (VSI)s.; As a result, inexpensive Ethernet-only aggregation networks can be designed to interoperate with VPLS with increased reliability and control, benefiting service providers and end users.

WO2010/030437 discloses an approach where Virtualization platforms and management clients therefor are communicatively coupled to one another via a control layer logically disposed therebetween. The control layer is configured to proxy virtualization management commands from the management clients to the virtualization platforms, but only after successful authentication of users (which may include automated agents and processes) issuing those commands and privileges of those users as defined by access control information accessible to the control layer. The control layer may be instantiated as an application running on a physical appliance logically interposed between the virtualization platform and management clients, or a software package running on dedicated hardware logically interposed between the virtualization platforms and management clients, or as an application encapsulated in a virtual machine running on a compatible virtualization platform logically interposed between the virtualization platforms and management clients.

US 2011/0 116 376 discloses an approach for integrated content delivery. A request for content stored on a disk array of a router is received. In response to the request, one or more disks of the disk array are selected to retrieve the content, wherein the disk array is natively coupled to a switch fabric of the router. A path is determined through the switch fabric for transmission of the content.

WO 2010/145 347 = EP 2 458 782 discloses a switch being located towards the end user systems between the end user system and the BRAS. The switch establishes several VLANs wherein each VLAN comprises a port of a BRAS backup device.

### Summary of Invention

The invention is defined as a Virtual Broadband Remote Access Server (BRAS) Cluster having the features of independent claim 1. Advantageous embodiments are defined in the dependent claims.

The invention describes a low-level design technical description of a BRAS-Redundancy implementation. The BRAS "Stateful Interchassis Redundancy (SICR)" is explained in detail and requirements for the involved network elements Aggregation Switches (AGS1 and AGS2), Access Nodes (relevant ANs: GE-DSLAM, MSAN and OLT) and LER (entrance point into Backbone) are specified. Primary goals of the project BRAS SICR are redundancy, scalability and flexibility improvement of the today running single-system BRAS solution. Furthermore, from operational perspective, things should not change. The future BRAS-cluster remains 'one touch point' (although then virtual) for all management and provisioning systems.

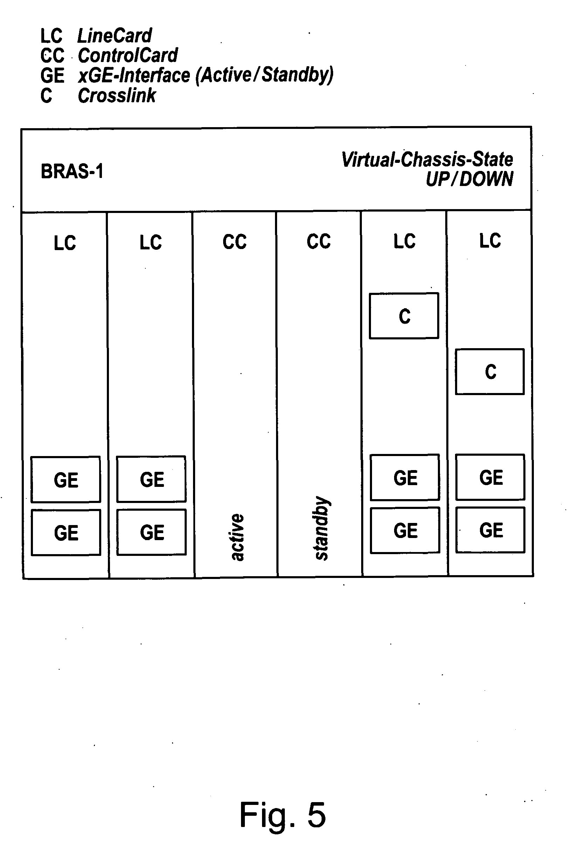

The Virtual-Chassis-State DOWN (Fig.5) means:
- out of sync
- no active users
- all backbone interfaces are down

The term switchover denotes the automatically takeover of customer sessions from a BRAS-chassis to another, in the event of failure, without any service disruption or need for reconnect. So the overall quality of the offered IP service is untouched by switchover events. (Fig.5)

The invention is directed to a virtual Broadband Remote Access Server (BRAS) Cluster comprising at least two BRAS (more than two are possible). Each of the BRAS comprises a Data Plane, Control Plane and Management Plane. The Data Plane comprises the ports, the hardware and software components to provide the data transfer between AGS an LER. The Control Plane is responsible for the control and configuration of the data plane. The Management Plane allow to the management of the whole system by providing interfaces and access technologies to third party applications.

In the virtual BRAS cluster a common control plane and a common management plane spans over the at least two BRAS, implementing a redundancy on the Virtual BRAS cluster by providing the functionality of the control and management plane, by controlling and managing the at least two BRAS. These common planes prefers software modules which are located on both units and which synchronizes data, to keep both BRAS in the same state.

The common control plane and a common management plane is the external access point to the virtual redundant BRAS, wherein in case of a failure of one of the BRAS the common control and common management plane, switchover the functionality to the working BRAS.

The common management plane and/or common control plan control both BRAS with interfaces and mechanisms, providing logical interface for subscriber management, accounting and/or operational functionalities, which is tighten to both BRAS within the cluster.

The Virtual BRAS Cluster is connected at the same level to two Aggregation Switches (AGS2) to the user side, and to one Label Edge Router (LER) to the network/backbone side, therefore, a BRAS is single-homed but the virtual BRAS-cluster is dual-homed, which establishes redundant connections into the aggregation and backbone area.

Furthermore in a preferred embodiment the subscribers are connected via PPPoE sessions and in case of a failure of one BRAS the PPPoE sessions are switched over on the network level of the PPPoE sessions without interruption of the PPPoE session.

The software modules running on the two BRAS to implement the common control plane and/or the common management plane, communicating over a crosslink synchronizing the management plane and control plane by using a protocol, to exchanging all the subscriber relevant management information and subscriber specific parts of the configuration, comprising one or more of the following information:
- BRAS, slot and port information to the interface within a Link Aggregation Group (LAG)
- authentication (user-id/username)
- accounting
- assigned IPv4 and IPv6 addresses
- Virtual-State
- State "UP"
- State "DOWN" (possible state after cross link failure shown further down)
- user interface- and session-related information

Furthermore the configuration which is needed for access-circuit provisioning or integration of new DSLAM/MSAN is synchronized within the BRAS-cluster.

According to the invention, in case of a broken crosslink a synchronisation Tunnel over labelled Edge Router (LER) is used.

Between AGS2 and BRAS a traffic encapsulation, like QinQ, is used to define the source AN like GE-DSLAM, MSAN or OLT (outer VLAN) and the xDSL (GE-DSLAM/MSAN) ports (inner VLAN), to establish an aggregation network.

Towards the aggregation network, an interface-group over the BRAS is used, wherein in an interface-group only one port is active at a given time, by signalling (LACP) the "up" status on a port the other port is automatically set to operational "down".. The operational down" port periodically sends out LACP messages, and missing LACP arrival within the configured dead-interval is an indication of physical interface outage.

The ports within one interface-group have the same MAC address. This allows a fast transition between the ports without losing a PPPoE session.

The los of AGS2 connectivity forces a switchover of all effected PPPoE sessions sessions locally terminated and sessions forwarded via L2TP to the redundant BRAS.

The virtual BRAS Cluster is configured to switchover stateful one or more of the following protocols and/or functionalities:
□ Customer PPPoE Session and access-circuit state
□ PPPoE, PPP, NCP (IPCP and IP6CP)
□ IPv6 RA und DHCPv6-PD
□ RADIUS (authentication and accounting)
□ L2TP (see corresponding chapter)
□ Lawful interception
□ ANCP TCP-Sessions.

The implementation of this stateful switchover of the Virtual BRAS Cluster is configured to synchronize within the cluster one of more of the following information:
□ QoS information
□ Access-circuit specific configurations
(only in case of a SICR solution without a shared configuration)
□ ANCP Database (see description)
□ SNMP
□ Physical Interface counter
□ Session and Service Accounting

The BRAS SICR concept improves the overall availability of the aggregation-platform. From customer point of view, a BRAS or adjacent system outage should not decrease the quality of the subscribed ISP service and should not be noticeable.

The overall availability of the aggregation-platform is defined by the sum for all devices inside the IP access chain. The overall availability of this chain includes the first mile (GE-DSLAM, MSAN or OLT) and second mile (AGS1, AGS2, BRAS and LER). Increased availability of one device in the chain will lead to an enhanced availability of the whole T-Home-Entertain target architecture (THE-TA).

Multiple BRAS systems are connected to one AGS2. This points out that the AGS2 is the network element with the highest customer impact in case of system outage. The effect of an AGS2 system outage, along with other possible outages, will be minimized by BRAS SICR. So with BRAS SICR the network element with the highest customer impact changes from the AGS2 to the AGS1. This represents a significant reduction of the affected customer base (from more then 32 thousand to 10 thousand curstomers).

This invention describes the targeted redundancy solution for BRAS. Unlike this 1:1 based approach, the goal of the forerunner project was to set up a N:1 redundancy solution for BRAS. In case of a BRAS failure, customers (e.g. 32 thousand and more, aggregated from many ANs) had to reconnect to the redundant BRAS. During the switchover process, running connect tions were lost and thus the outage was visible to the oustomer. This main issue, along with some other restricting aspects that came up during the planning phase of the solution, blocked and finally stopped all further N:1 solution efforts.

A main goal of the new invention, in this document described, 1:1 redundancy solution is to eliminate the need for customer reconnects. In BRAS SICR this is achieved by ongoing stateful synchronisation of (1) all customer sessions and (2) relevant state information between the two cluster members, thus allowing each unit to take over if required. BRAS-Cluster deployment is naturally associated with higher CAPEX costs, compared to the initial single system solution with lack of redundancy.

It is important to point out that BRAS SICR needs no essential additional customer IPv4 address space. Solely the clusterinternal implementation is estimated to require an additional /28 subnet: addresses required for L2TP tunnelling and for the cluster management. Due to today IPv4 address space constraints, this aspect will increase the overall acceptance of the planned solution.

The general definition of 1:1 redundancy describes a solution where one system has one dedicated backup system. BRAS SICR is a 1:1 based redundancy approach with both BRAS-chassis being active (aka transporting customer sessions) at a given time.

All features and functionalities related to legal aspects, Lawful Interception (LI) highlighted here, should also be covered in the BRAS redundancy solution. These functionalities should be handled in the same way like in the current single BRAS solution.

Upcoming BRAS redundancy related features enhancements (for instance MPLS PW redundancy, network functionality extensions) should fulfil all the requirements described in this document.

The term "Virtual-Chassis-State" denotes the BRAS-chassis state. The state 'UP' means the BRAS-chassis is working within the cluster. The state 'DOWN' means the BRAS-chassis is not working within the cluster and is only reachable for operation over a management network.

### Brief Description of Drawings

Fig. 1 shows the physical access interface on BRAS
Fig. 2 shows customer aggregation an AN
Fig. 3 shows AN aggregation on BRAS
Fig. 4 shows logical access interfaces on BRAS Cluster with Interface Groups
Fig.5 shows the BRAS-Chassis states;
Fig. 6 shows a full virtual BRAS-cluster;
Fig. 7 shows the planes of a partly-virtual BRAS-cluster;
Fig. 8 shows the structure of a partly-virtual BRAS-cluster;
Fig. 9 shows a network architecture with AGS1, AGS2 BRAS and LER;
Fig. 10 shows a split brain situation, where the crosslink is broken and a negotiating is done over the LER;
Fig. 11 shows the provision and operation of the bras cluster, which is done via the virtual management plane;
Fig. 12 shows the AGS-BRAS interface;
Fig. 13 shows IP-DSLAM access deployment;
Fig. 14 shows MSAN access deployment;
Fig. 15 shows VLAN7 vBridge/VSI in MSAN/OLT;

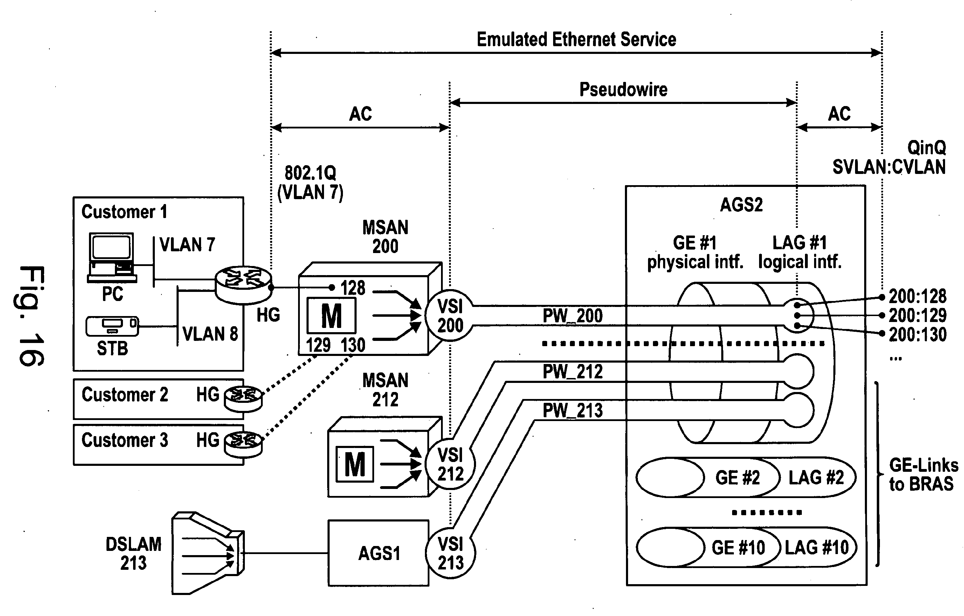

Fig. 16 shows the PWE3 access architecture THE;
Fig. 17 shows Nx10GE links;
Fig. 18 shows the backbone routing with link failure;

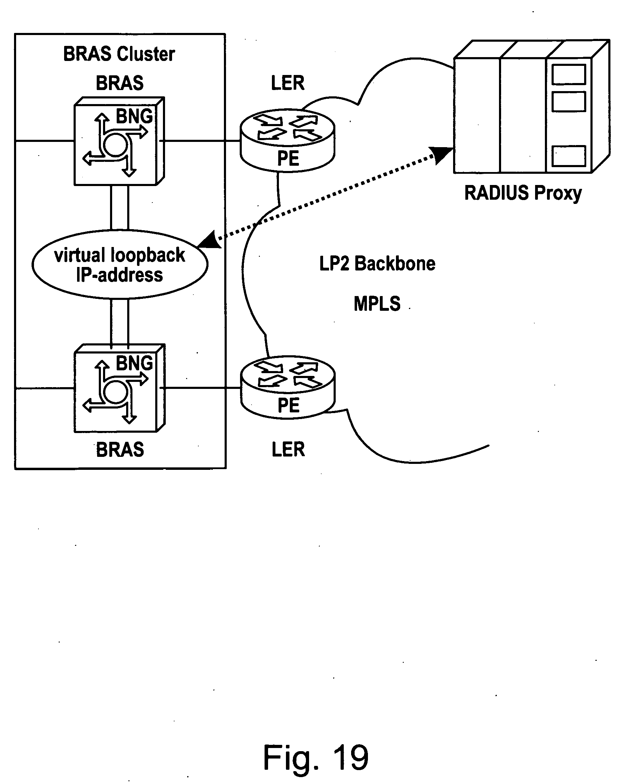

Fig. 19 shows RADIUS communication;
Fig. 20 shows L2TP in BRAS-Cluster Environment;
Fig. 21 shows a use case;

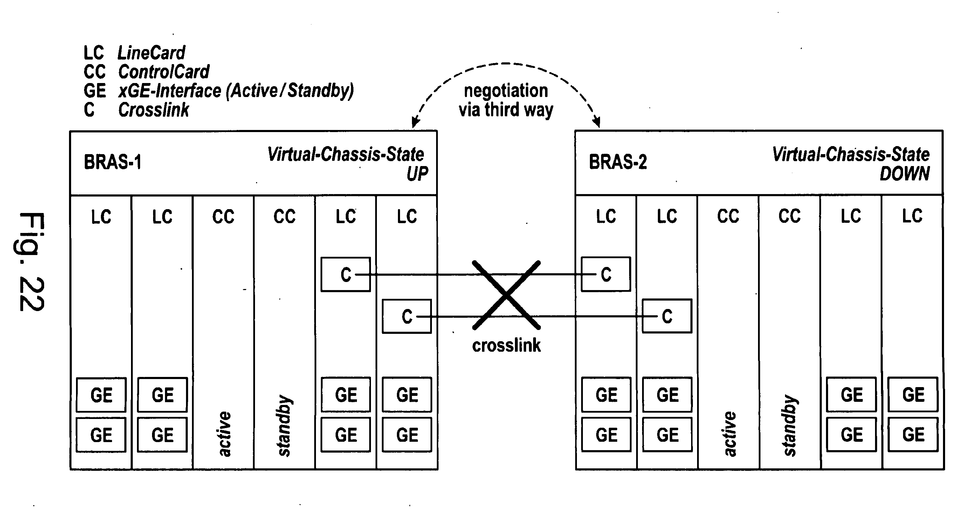

Fig. 22 shows a crosslink failure negotiation
Fig. 23 shows a flow chart of the crosslink failure negotiation
Fig. 2424 shows the synchronisation process of partly virtual BRAS-cluster

### Detailed Description of Preferred Embodiments

In the following two described definitions of the term Virtual-BRAS-cluster are possible:

### Full-Virtual BRAS-cluster Definition:

The term "Full-Virtual BRAS-cluster" describes a solution with a shared control and management plane spanning over both chassis in the cluster. The management plane should control both BRAS-chassis with all of its interfaces and mechanisms. The handling (operation, maintenance and troubleshooting) of a Full-Virtual-BRAS-cluster should be the same like with a single BRAS system.

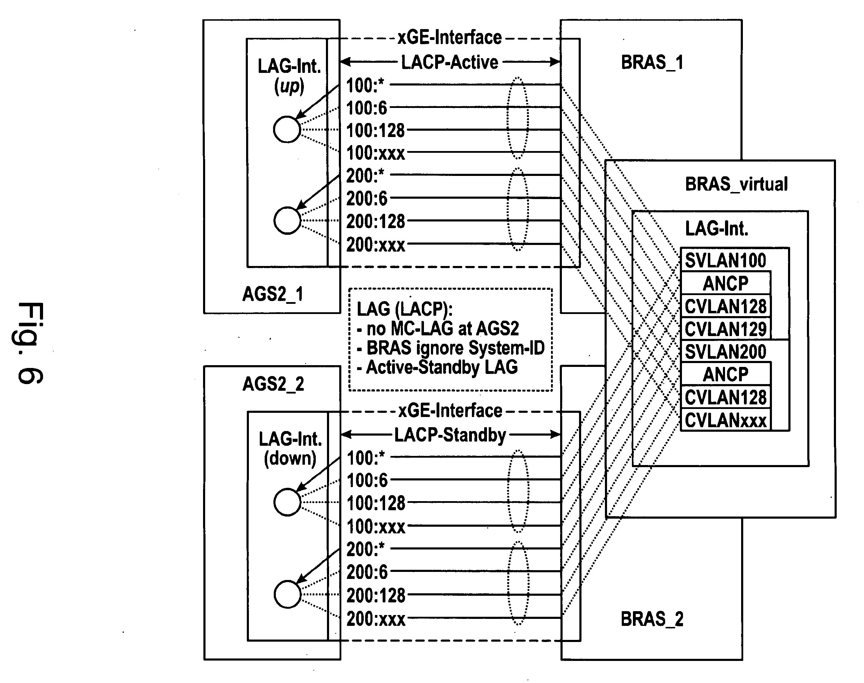

Figure 6 illustrates the expected behaviour of a Full-Virtual BRAS-cluster. All connections (including management access for operation and maintenance) should address the virtual system. The physical connectivity design should be very flexible and ensure that all interfaces of both BRAS-chassis can be used. There is no individual access to one of the members of the cluster possible.

### Partly-Virtual BRAS-cluster Definition

The term "Partly-Virtual BRAS-cluster" describes a solution, with a partly common (in general virtualized) control and management plane spanning over both chassis in the cluster.

Both BRAS-chassis are autonomous systems with independent management, control and data planes. Additional to these planes both chassis have the initial mentioned common control plane (Virtual Control Plane) intended primarily for subscriber management and for additional common management functions. Consequently there are several access points the virtual plane, and both real planes of each BRAS-chassis.

Each control plane should be able to fully control its underlying hardware (chassis, linecards ...). This control plane should be physically located at each BRAS-chassis.

The virtual control plane is based on a synchronisation protocol running between the two chassis. This protocol should synchronize all the subscriber relevant management information and customer specific parts of the configuration. The synchronization should be the base for all software activities, which steer the expected behaviour of the BRAS SICR solution, as described in this document.

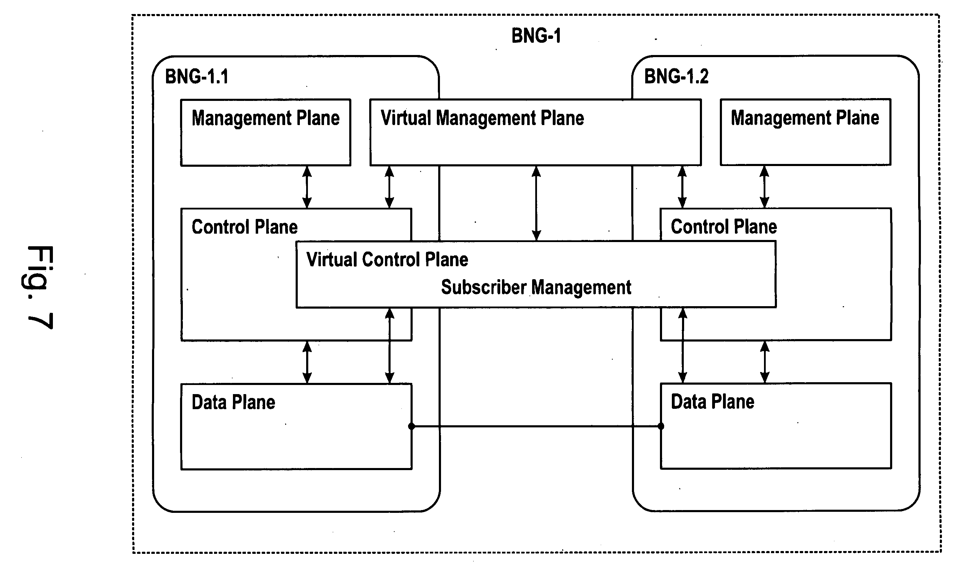

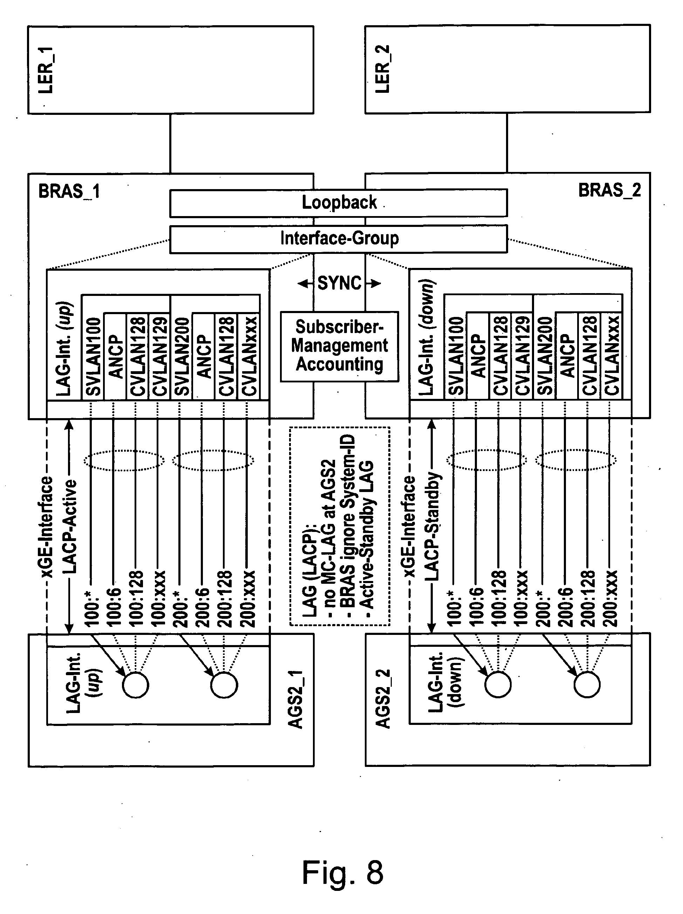

Figures 7, 8, 24 details the expected behaviour of a Partly-Virtual BRAS-cluster. The BRAS-cluster should be visible as one, virtual BRAS. Because controlling instances (e.g. RADIUS-Proxy) identifies the BRAS-cluster over a single, unique IP address, this address should be shared inside the cluster.

From operation point of view, it is important, to have a single logical interface for subscriber management, accounting and operational functionalities, which is tighten to both BRAS-chassis within the cluster (virtual management plane). The physical connectivity design is very flexible, so that all interfaces of both BRAS-chassis can be used.

Due to the synchronization between the involved control planes, switchover is recognized and treated correctly (as further described in this document).

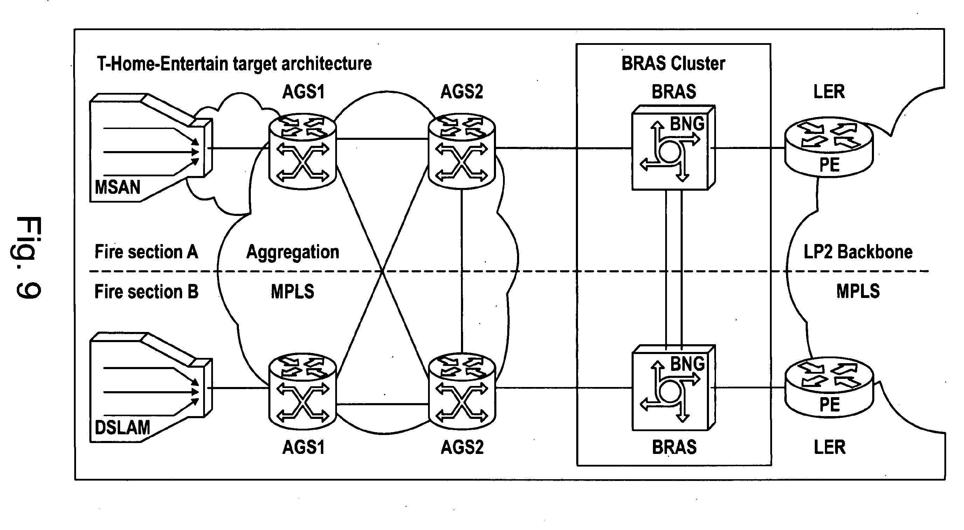

Figure 9 shows the connectivity design for the BRAS-cluster redundancy.

Each BRAS-chassis will be connected to one AGS2 and one LER. Therefore, BRAS-chassis is single-homed but the BRAS-cluster is dual-homed. The BRAS-cluster, as a virtual system, has redundant connections into the Aggregation and Backbone area.

The BRAS-cluster is physically split and each BRAS-chassis should be placed in different fire sections. From the network and logical point of view, the BRAS-cluster behaves and is visible as one virtual BRAS. A crosslink connects the two BRAS-chassis. This 10GE-based connection is be used for synchronization and traffic forwarding between the cluster members. Due to high availability considerations, the crosslink should be set up using at least 2 interfaces. To obviate possible linecard outage, the ports used for the crosslink should reside on different linecards. The fibre links used for the crosslink should follow disjunctive paths between the two fire sections hosting the BRAS systems.

Finally, a sync-only last resort connection between the two BRAS-chassis should exist. This connection is helpful in the event of complete crosslink failure and will be used exclusively for synchronization purposes (implies: no customer traffic forwarding), to steer correct BRAS SICR behaviour. The expected system behaviour in conjunction with the last resort link usage is detailed in the following technical proposal.

### Split-brain Situation:

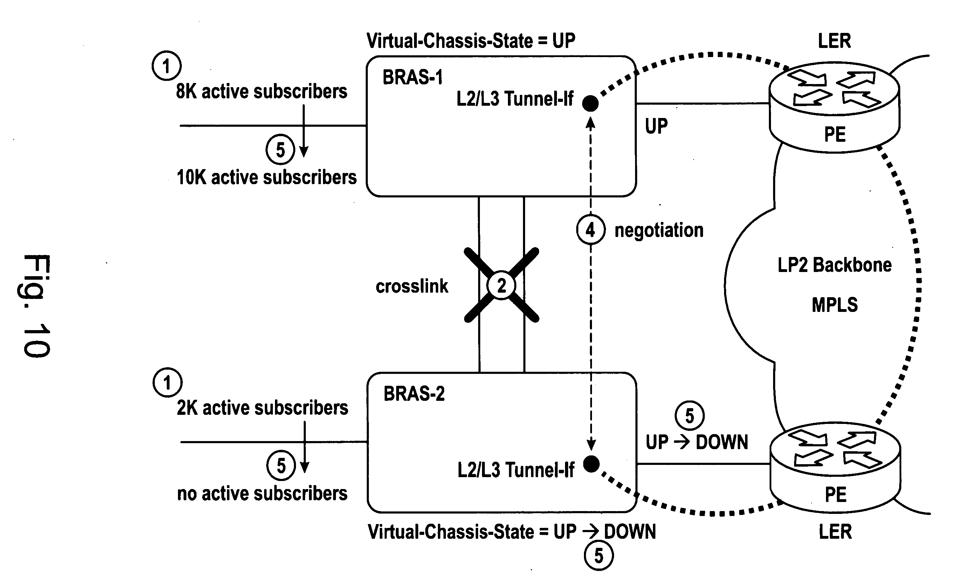

A complete crosslink failure could lead to a 'split-brains (Figure 10) situation, meaning that both BRAS-chassis go 'active' and compete for the termination of customer sessions. To encounter this error, the following described technical workaround could be used.

L2TPv3 can be used to dynamically set up a logical-link between the BRAS-chassis. This transparent connection serves as last resort synchronization path. Depending on the vendor specific implementation, it can be used for L2 and/or L3 traffic forwarding.

A synchronization interface will be set up, where the communication between the BRAS-chassis will be forwarded. This connection can be used by the vendor preferred synchronization protocol.

The L2TPv3 tunnel will follow the global IP routing table. So use of normal re-routing functionality is the key of the solution. Within this transparent tunnel, sync communication between the BRAS-chassis could be achieved. This implementation could be used by SICR to clearly distinguish between neighbour BRAS-chassis down or crosslink failed entirely.

The initial logical-link establishment can be done via the crosslink. After complete crosslink failure, the logical-link will follow the routing table change to keep the communication up and running between the two BRAS-chassis. If the logical-link cannot be re-established within a short timeframe, the neighbour BRAS-chassis should be declared as 'down' and all sessions should be switched over.

With such a solution the critical situation of 'split-brain', where both BRAS-chassis try to switch over all access-circuits and PPPoE session, is successfully overcome.

The negotiation within the BRAS-cluster, which BRAS-chassis should take all sessions and which BRAS-chassis should shut down its functionality, should be based on the number of active sessions. The BRAS-chassis with the highest number of sessions should take the active state within the BRAS-cluster. The BRAS-chassis with the lowest number should shut down its backbone interfaces. Sessions, which need to be forwarded via L2TP, should also count to the overall number of PPPoE sessions.
BRAS-chassis_1 80% Sessions active
BRAS-chassis 2 20% Sessions standby (shut down interfaces except the sync-link)

There should be a tiebreaker if both BRAS-chassis would have the same number of active PPPoE sessions. In this case, the BRAS-chassis with the lowest IP-address of the interface pointing to the LER should take the active state.

### General Features

In the following the general features for BRAS SICR are described.

In case of failure, only the effected PPPoE sessions should be switched over to the redundant BRAS-chassis. After the switchover, the PPPoE sessions should stay at the other chassis. There should be no automatically switchback after a recovery of a failure within the architecture. Anyway it should be possible to manually switchover all or selected parts of a BRAS-chassis at any time.

A switchover should be possible for:
□ Single Interfaces
□ Linecards with all interfaces
□ BRAS-chassis with all linecards and interfaces

There can be up to 10 PPPoE sessions per customer. One important requirement is that all PPPoE sessions of one customer (corresponding access-circuit) should be terminated at the same BRAS-chassis within the cluster. That means that only one interface (physical interface with corresponding LAG) within an interface-group should be in forwarding state (operational up). All interfaces within an interface-group share the same interface MAC-address. Because of MAC-address learning in the aggregation network the MAC-address of one interface-group should only be learned at one interface at a point in time. This behaviour will be detailed in the chapter "Traffic Delivery and Signalling". This approach is preferred but other approaches with split sessions distributed over the BRAS can be implemented too.

Both BRAS-chassis within the cluster should have the same configuration. This requirement targets on the access-circuit specific part. Independent of the SICR solution the provisioning of new access-circuits should only be done at one BRAS-chassis or through a virtual configuration instance. The configuration which is needed for access-circuit provisioning or integration of new DSLAM/MSAN should be synchronized within the BRAS-cluster.

The concept of BRAS SICR should be realized in a way that all existent features and functionalities within the network can be used like before in the single BRAS deployment. This requirement is based on contracts with partners, competitors and the regulatory authority. Further, the solution should not change the customer-interface to the network or influence or change the scalability of other network elements within the target architecture.

As already mentioned, the cluster members use a common loopback IP-address for the communication with the RADIUS platform which is independent from the present BRAS-cluster redundancy state. The expected RADIUS behaviour will be described in chapter "RADIUS".

If connected customer PPPoE sessions could not switch over in a stateful manner, the BRAS-cluster should trigger a session release in both directions (CPE and RADIUS). A PADT message should therefore be send towards the CPE, to trigger a reconnect. To realize this, the PPPoE session-ID and the client MAC-address should be available and synchronized between the chassis. Additional, accounting-stop messages for sessions and services should be sent to RADIUS.

Basically the same requirement exists for the ANCP communication between AN and BRAS. Only one IP-address should be used for communication. ANCP data should also be synchronized between the BRAS-chassis. ANCP communication and requirements are detailed in chapter "ANCP".

For synchronization of the configuration data, the crosslink between the cluster members will be used. Because this connection could also be used for user traffic forwarding, the synchronization traffic should be assigned a higher priority inside the QoS model.

For the Partly-Virtual BRAS-cluster architecture it is important to point out, that a single management IP-address should be used for provisioning the access-circuit specific configuration. Along with the access-circuit specific configuration, configuration due to modification in the aggregation area (insection or deletion of AN like DSLAM/MSAN/OLT systems) should not increase. Towards the I2B and FlexProd, the Partly-Virtual BRAS-cluster should be visible as one system, like in the actual Single-BRAS architecture.

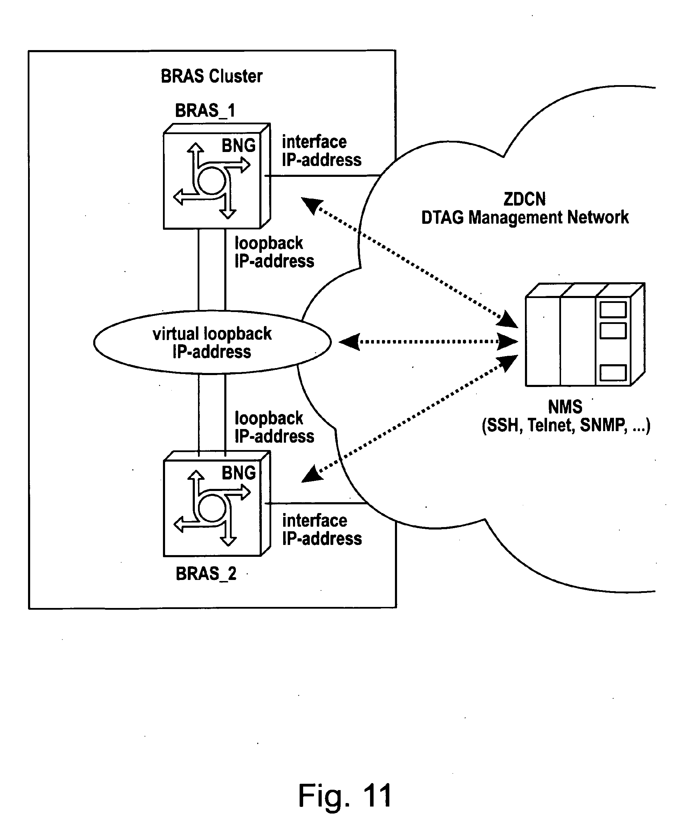

As visualized in Figure 11, the BRAS-cluster should have an additional virtual IP-address for Network Management. This IP-address should be reachable over Management Network.

Furthermore, each BRAS-chassis should have a dedicated and unique physical IP-address, clearly identifying the unit within the cluster.

Additional virtual IP-addresses are used for access-circuit specific configuration and are therefore shared between the cluster members.

Generally it should be possible to apply configuration changes over all addresses. The synchronization process should be unaware of the initial used configuration target address.

The BRAS-cluster solution should support all processes and functionalities, used by the operating today to deploy and support the BRAS solution.

The BRAS-cluster should be manageable over a single IP-address which should be reachable, independent of failure cause (see Table 1). It should be possible to use this virtual loopback IP-address to manage the BRAS-cluster over CLI (Telnet / SSH) and SNMP. All information related to the subscriber management should be visible over this IP-address. It should be possible to manage the whole BRAS-cluster including the complete BRAS feature set and chassis related information (e.g. counter, statistics ...) over this virtual loopback IP-address. In addition it should be possible to use a chassis-specific interface or loopback IP-address to selectively manage a dedicated BRAS-chassis over CLI (Telnet / SSH) and SNMP. All BRAS-chassis related information should be visible over this IP-address.

Like described before and visible in Figure 11, a virtual IP-address should be shared between the cluster members (virtual loopback IP-address identifying the entire BRAS-cluster). This address will be used for all cluster-related operations.

The exact identification of an access-circuit and the corresponding customer sessions should be guaranteed. During operation and troubleshooting it should be possible to easily find out where exactly a specific customer session is terminated. This is very important, especially if the access-circuit/PPPoE sessions have been automatically switched and terminated at the redundant chassis (for example after a failure). In the underlying deployment model, there is a 1:1 assignment of customer sessions to BRAS-chassis. To fulfil the mentioned requirement, the following customer-related information should be available:
□ access-circuit and related information, LAG of connected customer session(s)
□ BRAS-chassis, slot and port information to the interface within a LAG
□ authentication (user-id/username)
□ assigned IPv4 and IPv6 addresses
□ Virtual-Chassis-State
□ State "UP"
□ State "DOWN" (possible state after cross link failure shown further down)

The crucial information about the status and the health of the BRAS-cluster should be visible in the Management System. Due to the danger of redundancy blocking, it is an essential requirement to early detect and see misbehaviours of the BRAS-cluster in the management platform. The possibility to early discover the cause of misbehaviour on the management system should therefore be assured. To accomplish this, special alarms which clearly describe the cluster specific failure, should be implemented. The lost of special functionalities should clearly be described within the alarm message. For example, if the crosslink between the BRAS-chassis goes down, more than an 'interface down' standard alarm should be sent out.

It should be possible to manually and selectively switch over established access-circuits and PPPoE sessions. At an extreme end, complete BRAS-chassis inactivation should be possible. This applies particulary for in-service software updates (ISSU).

### Network Management, SNMP and Alarming:

Special alarms should be implemented which clearly describe cluster specific failures. All these alarms should be available and send out as SNMP-trap and syslog-alarm. Furthermore it should be possible to send out alarms, sourced from Syslog, using SNMP-Traps.

The BRAS-cluster should remain visible as one unit in the management system, no matter if partial outage or complete member failure occurs.

From operational point of view, performance management is a key requirement. Based on vendor specific threshold values, the system should send out alarm messages via SNMP and Syslog, which inform the NMS about performance issues. It should be possible to configure the required thresholds in a flexible way.

Possible thresholds could be:
□ interface utilization
□ number of PPPoE sessions
□ CPU utilization
□ memory utilization
□ packet loss

Each BRAS vendor should provide KPI thresholds, which are defined as critical for the current BRAS and the new BRAS-cluster solution.

### Traffic Delivery and Signalling

The following passages describe the basic concept of access traffic delivery and signalling. It details how the traffic should be transported via the aggregation network towards a BRAS-cluster and how a BRAS-cluster can signal the active path to the IP backbone towards the aggregation network and customers. In the GE-based deployment, three different access models will coexist. This document describes the access via MSAN, OLT and GE-DSLAM systems.

### AGS2 - BRAS Interface and Signalling

This section describes the interface between BRAS and AGS2, including protocol stack operation and signalling between these systems.

Between AGS2 and BRAS QinQ traffic encapsulation should be used to define the source GE-DSLAM, MSAN or OLT (outer VLAN) and the xDSL (GE-DSLAM/MSAN/OLT) ports (inner VLAN or alternatively session related information which comprises an identificarion of the Access-Port). The outer VLAN is called SVLAN and the inner VLAN is called CVLAN. At the BRAS, the current interface configuration with QinQ encapsulation will also be used for the BRAS-cluster. A separat CVLAN is used for the ANCP communication between GE-DSLAM/MSAN and BRAS, while apart CVLANs are used to forward customer traffic. The traffic will be encapsulated with the SVLAN mapped to the GE-DSLAM, MSAN or OLT, where the access-circuit is terminated. QinQ traffic, entering the AGS2 switch is handled like described here. The SVLAN is mapped to a pseudowire connection towards the GE-DSLAM and MSAN. The SVLAN will be stripped of and the traffic is forwarded transparently via the pseudowire connection. The CVLAN-IDs will be kept and transparently forwarded inside the pseudowire. Within the aggregation network, MAC addresses learning will be enabled to ensure a correct traffic delivery. The access circuit MAC addresses are unique due to the configuration of MAC address translation (vMAC) on the DSLAMand MSAN.

Towards the aggregation network, an interface-group over two BRAS-chassis should be used. In an interface-group only one port should be active at a given time. By signalling (LACP) the "up" status on a port the other port is automatically set to operational "down".
The port should not be set to physical down because the initialization time for returning to forwarding (operational "up") would take too long and the functionality check of the backup port would not be possible. LACP should ensure that the backup port is functional and ready for operational fast change from "down" to "up". This concept allows the BRAS to control the active link within an interface-group.

The operational "down" port should periodically send out LACP messages. Missing LACP hello arrival within the configured dead-interval is an indication of physical interface outage. In this case a special alarm should be send describing the exact cause of redundancy loss.

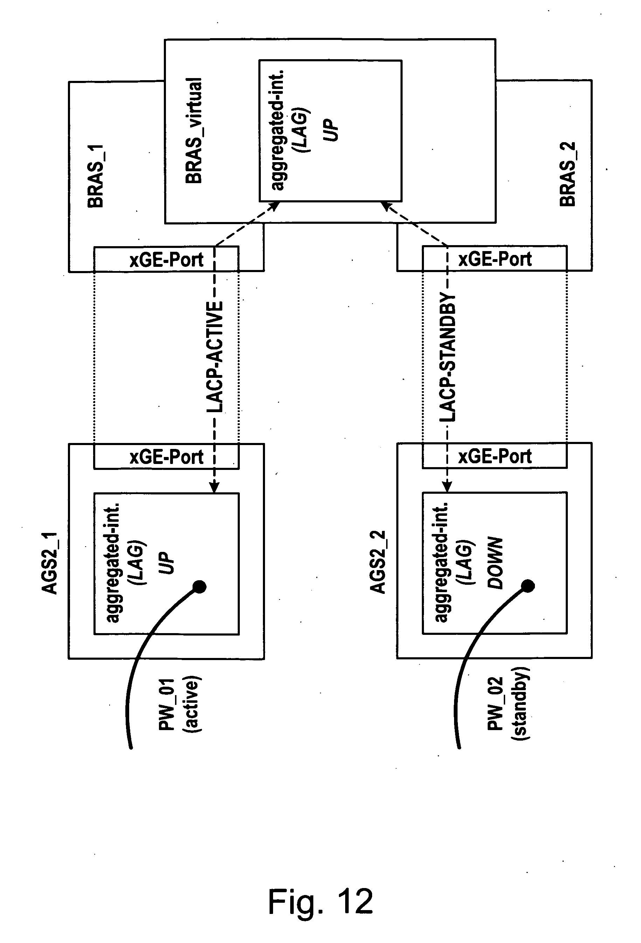

As shown in Figure 12, Multichassis-LAG is no deployment option. For the BRAS-cluster solution it is crucial to ignore the LACP System-ID of the AGS2 on BRAS site, because the redundant AGS switches will use different LACP System-IDs. For the whole functionality of the aggregation network it is important to signal the redundant port of the interface-group as down. A behaviour like keeping the port up but don't forward traffic is not acceptable, because the pseudowire redundancy inside the aggregation network is triggered, based on the port status of the attached circuit.
For stateful switchover, the ports within one interface-group should have the same MAC address. After switchover it is important to inform neighbouring instances of the occurred change. Therefore a broadcast packet is send into all SVLANs of the interface-group. By doing this, MAC address learning within the "Y-Adapter" is active. Preferred is the use of G-ARP (Gratuitous ARP) in the ANCP VLANs for this purpose.

### PW Redundancy for BRAS-Cluster

Compared to the DSLAM solution, the functionality of a "Y-Adapter" has been replaced by PW Redundancy.

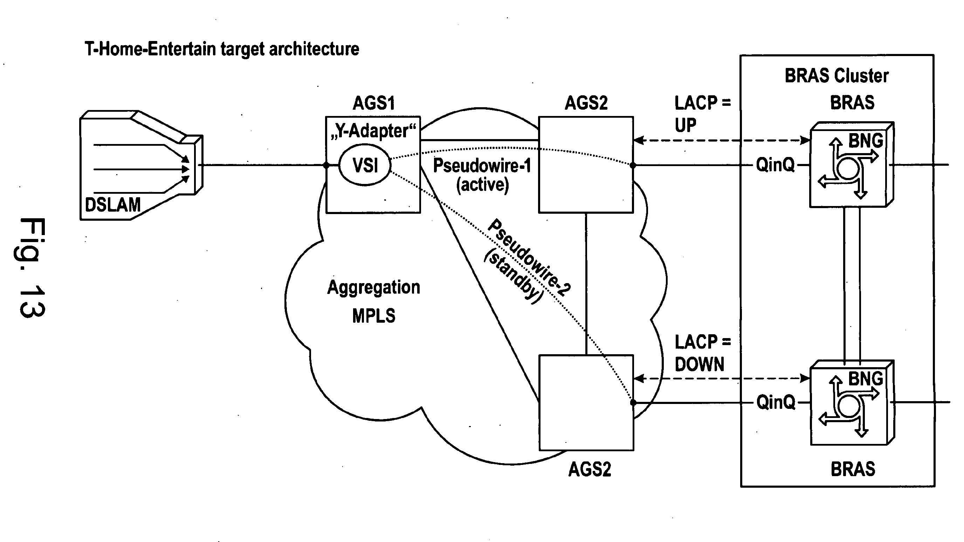

It is important to point out that peering now starts on the Access Node (MSAN or OLT) and no longer on the AGS1. PW peering endpoints are the LAG interfaces on AGS2, thus identical to the DSLAM usage. Figure 13 illustrates the changed scenario in the MSAN-deployment.

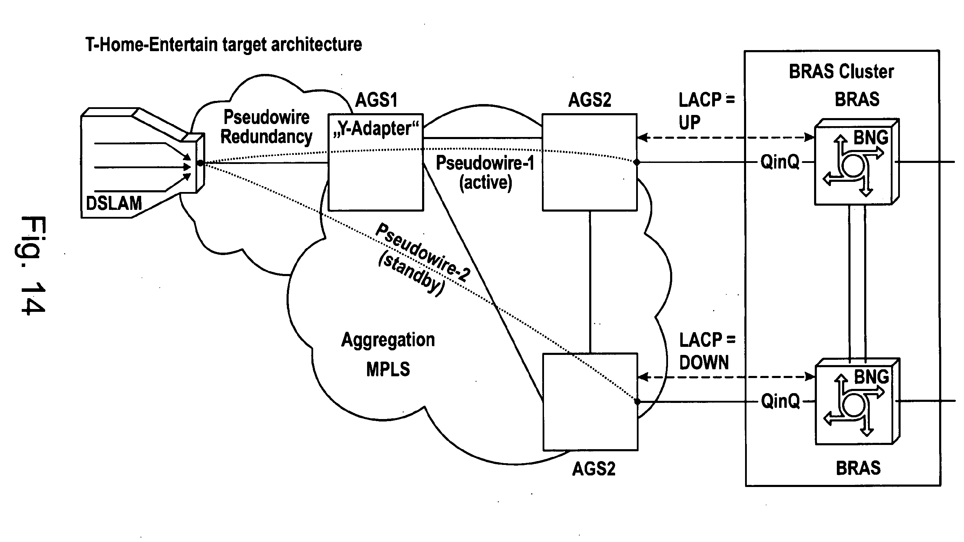

To ensure correct rerouting within the MPLS aggregation network, the PW endpoints should be bound to loopback addresses. Figure 14 shows the corresponding MSAN access deployment

The status of the PW is indirectly determined by the BRAS. The BRAS signals the active/passive-state of each LAG-interface to the neighboring AGS2 through LACP. For the PW the SVLAN represents the Access Circuit (AC). The AC has the same operational state as the underlying physical interface. If the LAG-interface is in operational state "down", then the PW goes to "standby". As a result of this behaviour, only one PW is active at a given time.

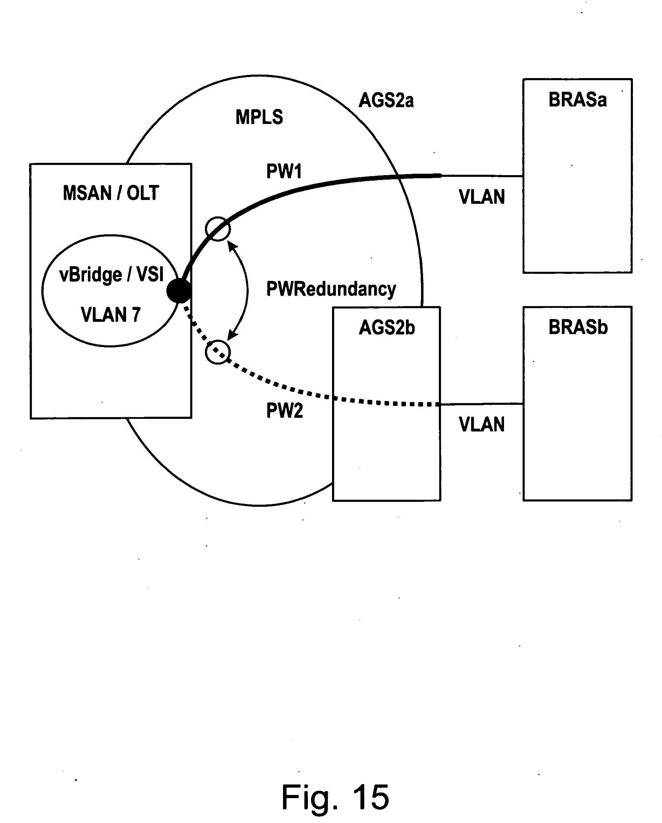

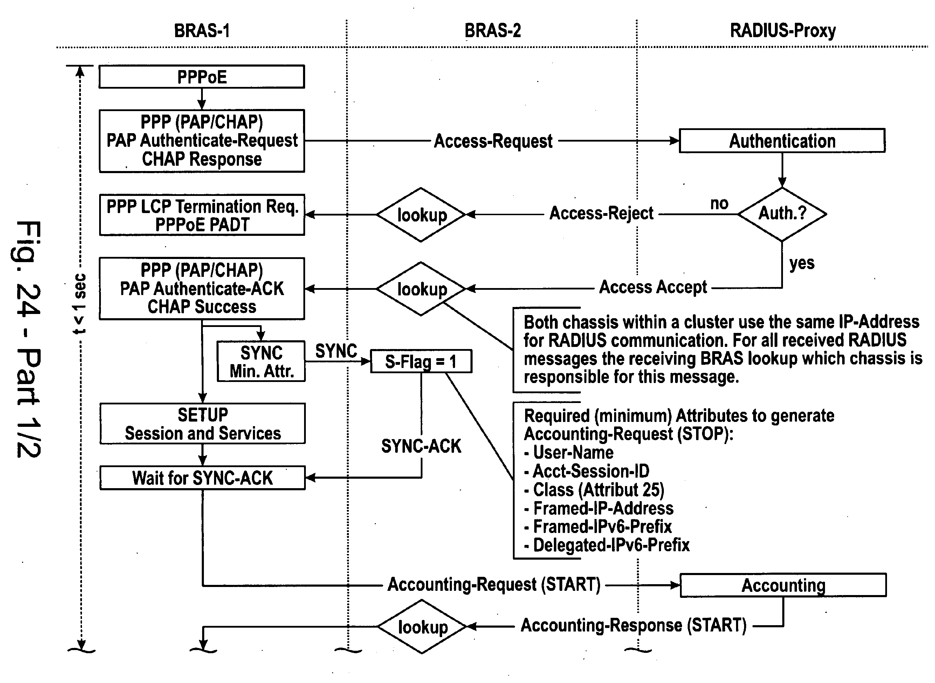

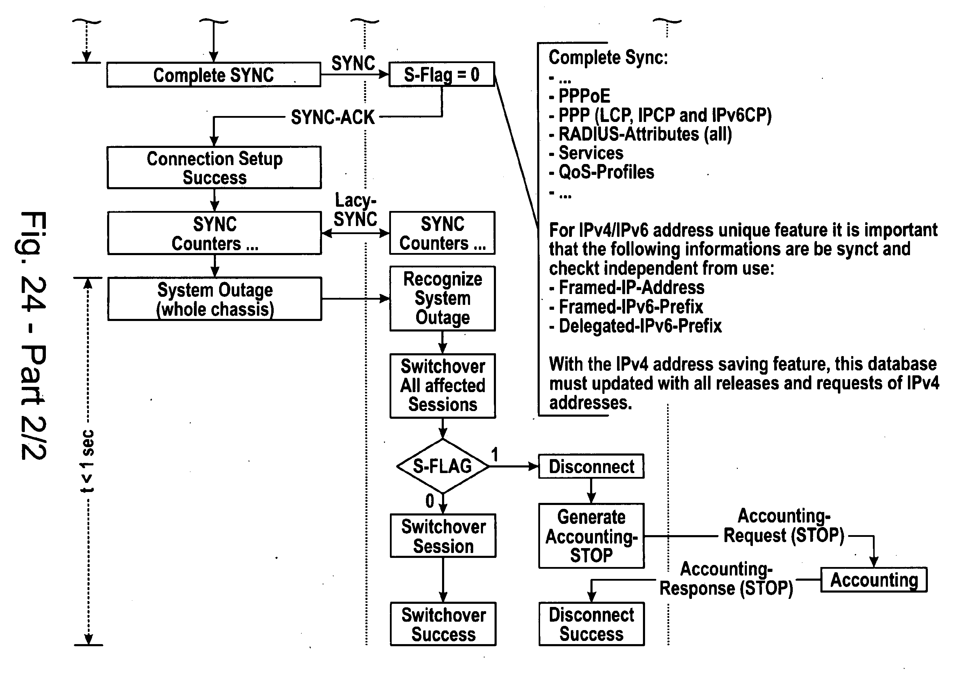

The two PWs of one CVLAN7 (Fig. 24, 15) vBridge/VSI have different PW-ID's but the same group-ID. In general the group-ID is set to zero. The Figure 15 shows the CVLAN7 vBridge/VSI in MSAN/OLT.

The AGS2 signals the status of AC towards MSAN/OLT using the PW's status code field (RFC 4447). If an interface between AGS2 and BRAS goes active, no explicit "PW Request Switchover" is required.

A "MAC address withdraw message" is not required. According to the PW redundancy approach the independent mode should be used. Alternatively the MSAN/OLT goes into "slave" role in the active/slave model. Because status determination is dictated by BRAS/AGS2, no active/passive mode (non-revertive) needs to be considered.

Migration to BRAS SICR requires that the additional PW has to be merged with the existing PW into a common PW redundancy set.

### Backbone:

This chapter describes the BRAS - LER connectivity and the traffic flows from and to the backbone. The routing of outgoing traffic (uplink towards the backbone) and incoming traffic (downlink from the backbone) should be achieved like described within this chapter.

The routing behaviour described in this chapter is valid for IPv4 and IPv6. The routing should behave like described below, regardless which BRAS redundancy solution (Full-Virtual-BRAS-cluster or Partly-Virtual-BRAS-cluster) is used. Independence of the underlying BRAS-cluster design is a key requirement to keep the configuration and integration of different vendor BRAS-clusters towards the NMS infrastructure transparent. The AddOn-configuration of other network elements due to BRAS-clustering should also be independent of the internal, vendor-specific BRAS-cluster implementation.

Routing relies on configured static routes. A dynamic routing protocol should not be used between BRAS and LER. Routing of outgoing traffic over the crosslink should be avoided. This traffic should normally flow over the direct BRAS-LER connection. Just in the case of a BRAS-LER link failure the crosslink should be used.

To guarantee fast convergence (sub second), the BFD protocol should be supported on single link and on layer-3 ether-channel connections between BRAS and LER. BFD support for static IPv4 and IPv6 routes should be implemented within the BRAS-cluster solution.

The connectivity between BRAS and LER should be suitable for deployment models with N x GE or N x 10GE links.

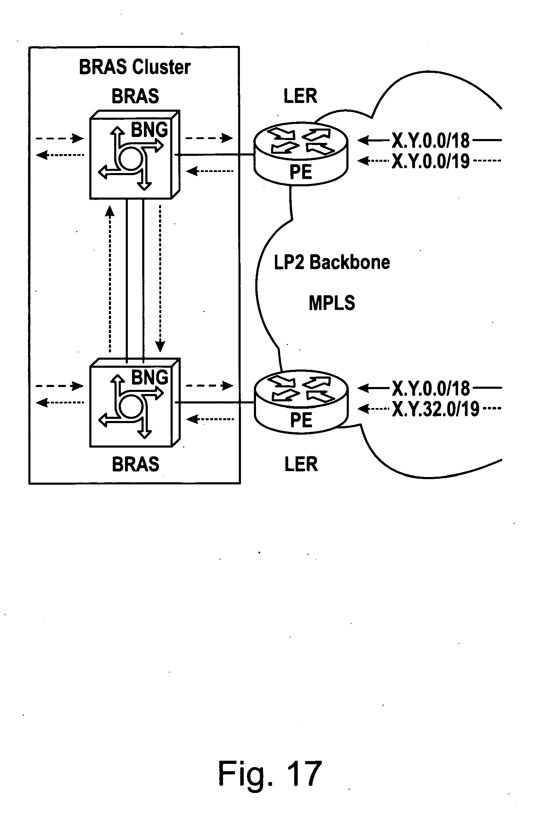

Figure 17 shows the Backbone routing.

For customer traffic towards the Internet, correct static default-routes should be configured on each BRAS-chassis. The routing decision should be taken in favour to the directly connected LER. This is achieved by configuring static routes with 'better' administrative distance/protocol preference value towards the directly connected LER.

The following implementation designs (deployment scenarios) can coexist:
□ Using aggregated physical links (LAG with LACP) for the connection BRAS to LER.
   In this scenario it should be possible to configure a bandwidth driven Ether-channel, which could be turned down by LACP, if the number of links within the channel falls below a predefined minimum value.
□ Using equal cost L3 routing links between BRAS and LER.
   In this scenario all customer traffic automatically gets load balanced by Equal Cost Multipathing (ECMP).

Both designs should be possible and ideally flexible triggered through simple configuration changes.

The incoming traffic is automatically load balanced towards the BRAS-cluster. On the peering LER systems routing will occur based on configured static summary-routes and more-specific static routes. Like shown in the figure above, the customer IP-pool will therefore be split within the IP routing. On each LER a summary-route and a more-specific route (consisting of the half of the customer IP pool) will both point to the directly connected BRAS. The Loopback IP address should be routed to the BRAS-cluster over both LER in load sharing mode (ECMP).

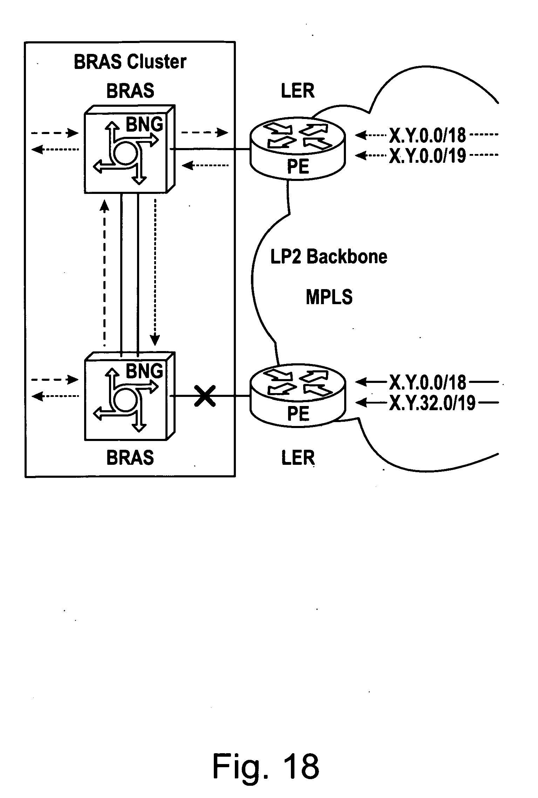

Figure 18 shows details of routing in the event of a LER link failure. If a link between BRAS and LER fails, part of the incoming traffic should be rerouted over the crosslink.

Like mentioned before, a link failure between one BRAS-chassis and the neighbouring LER should not trigger stateful switchover of any customer sessions. Just if there is no default route at all in the routing table (neither towards LER nor via crosslink), a stateful switchover of all active access-circuits and PPPoE sessions should be initiated.

**In case of Partly-Virtual BRAS-cluster Definition Failed** connectivity to both LER should result in missing default-route on cluster members. To prevent routing-loops in case of special failures or during BGP convergence, it should be possible to configure a static default-route with a distance/protocol preference of 250.

Brief summary of the expected routing behaviour: As long as a default-route with an administrative distance less then 250 exists in the routing table, outgoing traffic reaches the backbone. The next-hop is either the direct attached LER or the neighbouring BRAS (over the crosslink). In both cases, the active PPPoE sessions should not be switched over. If a failure on the direct connected link towards the BRAS occurs, then the LER stops sending route advertisements containing the summary and the more-specific route to its backbone neighbours. This will trigger the backbone to reroute the traffic via the remaining summary-route advertised by the redundant LER. Final note: a complete LER failure is already properly handled by standard BGP recovery mechanisms inside the backbone.

### BRAS-Cluster Internal Routing

The correct data plane forwarding of user traffic inside the BRAS-cluster should be granted. Therefore each new PPPoE-negotiated host-route should be made available inside and outside the cluster. User traffic is then forwarded along this host-route (if necessary across the cluster crosslink). This basic but mandatory requirement is valid for IPv4 and IPv6. The term IP address refers to both IP protocol versions. Due to scalability considerations a routing protocol should be used, which is able to handle a huge number of routes. The use of BGP will be preferred.

In case of Fully-Virtual-BRAS-cluster solution, another possible internal routing solution might be embedded in the cluster synchronization functionality. After the PPPoE session is established and the IP-address is negotiated, the synchronizetion within the cluster can be used to generate a forwarding entry within the redundant BRAS-chassis. A further important requirement is that routing should be restricted and enforced to active IP addresses only (active means successful NCP session establishment).

### RADIUS:

As repeatedely said, the BRAS-cluster is one management touch point (like the single-BRAS before). This statement consistently fits into the context of RADIUS: the BRAS-cluster (being the RADIUS client, also denoted as NAS) uses the cluster VIP address for the communication with the RADIUS server. By doing this, communication is decoupled and therefore not dependent from the state of a individual BRAS-chassis. Especially every stateful switchover within the BRAS-cluster is irrelevant - regardless of the underlying cause - for the overall RADIUS operation. The BRAS-cluster - as one RADIUS client entity - remains active and responsive towards the RADIUS server and therefore handles the RADIUS communication properly.
In consequence, important RADIUS attribute values do not change due to stateful switchover (except for counters, timers and ANCP values).

Manual or failure-triggered move of ports, line cards or chassis should not trigger a RADIUS accounting-stop message. All customer sessions should stateful reconnect without RADIUS interaction. A customer session is clearly identified by a NAS-ID, NAS-Port and NAS-Port-Type. During switchover these identifiers should stay the same, regardless of the changed BRAS-chassis terminating the access-circuit. Accounting counters should continue to increase without resetting to zero if switchover occurs.

All information required to generate a valid accounting-stop message should be synchronized before sending out further RADIUS messages (except for access-requests). The session context, including all active services, should be marked as inconsistent until all session and service information (except for counters) are fully synchronized. All sessions marked as inconsistent should be terminated (accounting-stop) during switchover.

Valid accounting-stop messages should include at least the following attributes:
□ User-Name
□ Acct-Session-Id
□ class
□ Framed-IP-Address
□ Framed-IPv6-Prefix
□ Delegated-IPv6-Prefix
□ Event-Timestamp

From addressing point of view, the required duplicate address check should not only be run against already used addresses but also against inactive addresses in the context. Especially in dual-stack deployments, the aspect of address space waste is a problem: IPv4 and IPv6 addresses are handed over by RADIUS to the BRAS, although just one address family was negotiated and requested by the customer. Following address assignments cannot use the actually not needed, but marked and thus reserved, IP addresses of previous assignments.

### L2TP

The availability of L2TP within BRAS SICR solution is a major requirement to support the wholesale market.

From routing perspective the following types of customer sessions have to be distinguished:
□ PPP locally terminated sessions (hereafter called normal PPPoE sessions)
□ PPP forwarded sessions (over L2TP)

### Normal BRAS-Cluster Operation and L2TP:

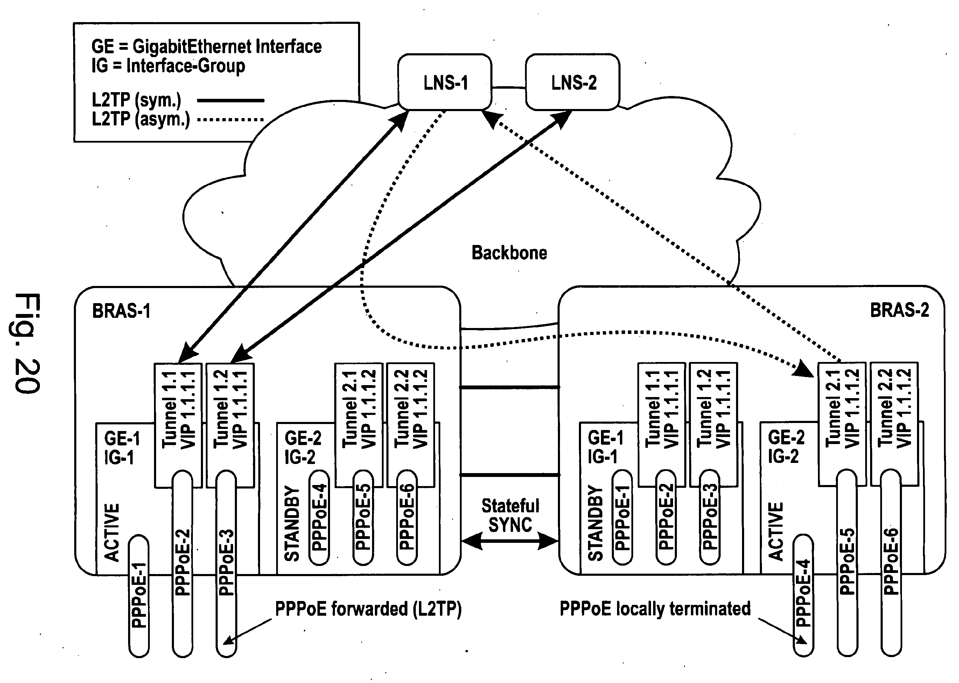

Figure 20 shows L2TP in a BRAS-Cluster Environment. Upstream traffic (toward the backbone) will go to the nearest LER. From an IP perspective the complete customer address space could be randomly distributed across all interfaces in both BRAS nodes (depending on active/standby role of GE interface towards aggregation network). In the Figure 20, BRAS-1 is the designated Primary BRAS, so by default all core downstream traffic (toward the customer) will travel to it. Packets going from core to user may hit the BRAS that does not have the active session, so they need to go over the crosslink to the other BRAS. Therefore a routing solution is in place to guarantee correct downstream traffic delivery to the right (= hosting the active sessions) cluster chassis.

General rules for forwarding L2TP sessions:
1) L2TP tunnels should be sourced from the same BRAS-chassis as the active PPPoE Session that is being forwarded (= active GE-interface towards customer aggregation network) Failover granularity of one access facing interface.
2) That means that all sessions under that interface should fail over when an interface fails over, along with any tunnels that those sessions are forwarded over.
3) Tunnels are created per-RG per-LNS as needed.
4) Assuming 10 access facing interfaces, this does mean possibly as many 10 x # of current LNSes. Sessions from different interfaces going toward the same LNS may exist but they cannot be forwarded in the same tunnel because each interface (RG) may fail over independently.

The high level order of events for routing L2TP traffic includes:
Network Provisioning
   □A default static route for all VIPs on access facing interfaces is provisioned in the core to send all VIP traffic to the designated Primary BRAS
   □A backup (lower metric) static route for all VIPs on access facing interfaces is provisioned in the core to send all VIP traffic to the other BRAS
   □A route to all VIPs through the Crosslink on both BRASes
Steady State (from figure 20)
   1. Sessions Come Up (PPPoE 2/3/5/6 in figure 20 above)
   2. Tunnels for those sessions come up, 1 tunnel per IG per LNS
   3. Sessions get synced/recreated on standby IGs
   4. Tunnels get synced/recreated on standby IGs

### L2TP in BRAS-cluster Failure Scenarios:

Stateful recovery of all (locally terminated and forwarded PPPoE) customer sessions, without loss of access-circuits and therefore without the need for PPPoE session reconnects, is a very important requirement and a main characteristic of the aimed BRAS redundancy solution. Following the normal PPPoE session handling, L2TP redundancy should be stateful. During L2TP tunnel switchover, all involved PPPoE sessions stay active and thus are seamlessly forwarded towards the LNS. The switchover should occur with an interruption of less than one second (sub second convergence). To accomplish this, ongoing state synchronisation between the cluster members is implied. All the below mentioned failures should be recovered in BRAS SICR.

It should also be possible to manually switch over an IG without service interruption. All established PPPoE sessions (normal and forwarded) switch over seamlessly to the new active unit for the corresponding IG. This manually switchover should also trigger a functionality, which also effects new L2TP tunnels setup after the manual intervention. This functionality is useful for software updates of the BRAS platform.

### Core Side Failure:

Correct routing of the BRAS-cluster towards the backbone is crucial. The outgoing L2TP tunnel should follow the default-route within the BRAS-cluster. In case of LER failure (system, link or line card), incoming and outgoing traffic should be rerouted over the crosslink to the redundant LER. The outage or recovery of a LER failure should neither trigger a reconnect of already established PPPoE sessions nor the termination or connection loss of active L2TP tunnel(s).

For both types of PPPoE sessions (normal and forwarded) core failure behaviour is the same:
1. Interface down towards core (for example backbone-link of BRAS-1)
2. BRAS-1 routing table now default routes all traffic to crosslink
3. Backbone now defaults all traffic to BRAS-2

It is important to underline that no sessions or tunnels fail over, all traffic just gets re-routed via current static routes in both BRASes and Core.

### Access Side Failure

Loss of AGS2 connectivity should force a switchover of all effected PPPoE sessions (sessions locally terminated and sessions forwarded via L2TP) to the redundant BRAS-chassis. The switchover process should occur without service interruption. The desired granularity of failure on the access side is a physical access interface. So each access facing interface will be in it's own Redundancy Group. This means that if there is a wire cut on one physical interface, just that physical interface, along with all PPPoE sessions associated with it will fail over to the standby IG.

Example: the failure of interface GE-1 (see Figure 11) triggers the following sequence for forwarded PPPoE sessions:
1. wire cut event on GE-1 triggers fail over process
2. IG-1 goes standby on BRAS-1 and active on BRAS-2
3. VIP 1.1.1.1 on IG-1 goes standby on BRAS-1 and active on BRAS-2
4. IG-1 sessions are removed on BRAS-1.Sessions and tunnels go active on IG-1 on BRAS-2

### Full Node Failure or Fire Section Failure:

The Full Node Failure or Fire Section Failure (AGS2, BRAS, and LER all go down) is just a combination of the Access Link Failure and Core Failure. A complete failure of a BRAS-chassis should be handled properly by the remaining chassis. From outer view, no service impact should be visible.

The following sequence of events occurs:
1. Full Node or Fire Section Failure
2.All IGs failover to remaining BRAS & all sessions and tunnels go active
3.Host routes changed from crosslink to access for each session going active
4.Core changes default route to remaining BRAS

As described in the technical functionality crosslink failure should be differentiated from chassis outage. Although, from remote point of view, a crosslink failure or a chassis outage looks identical, the technical solution should differentiate and handle the two different failures accordingly.

### ANCP:

The use of ANCP (see the corresponding RFC) within the BRAS SICR solution is crucial to support the QoS requirements. ANCP is a TCP-based session running between the GE-DSLAM/MSAN and the BRAS.

All relevant ANCP data should be synchronized between the BRAS-chassis. ANCP learned data should be kept after an ANCP TCP session loss.

The ANCP connection should be terminated at the BRAS-cluster using a virtual or shared IP/MAC address combination. This means that the IP and MAC address should be the same for a specific ANCP connection on both BRAS-chassis. After switchover it is important to send a broadcast packet with this source MAC into the L2 aggregation network segment. This process is known as gratuitous ARP (G-ARP) and serves the purpose of MAC-address learning.

The ANCP TCP communication should switchover stateful. If the ANCP TCP connection is lost during switchover, the ANCP TCP connection can be re-established using the mechanisms described at RFC 793 "Half open connection discovery".

If the TCP communication was switched over stateful, no ANCP data should be resend. If TCP session re-establishment is required, all ANCP data should be resend to keep the QoS mechanisms unaltered.

All QoS configuration parameters, which where set up dynamically during the establishment of the access-circuit and PPPoE sessions, should also be synchronized immediately between the BRAS-chassis. After a switchover, the QoS settings with its schedulers should further work.

### BRAS-cluster Fault Management (Use Cases)

This chapter describes the expected behaviour of a BRAS SICR while experiencing the failures listed in Table 1. Failures without customer impact and not related to SICR, like AGS1 to AGS2 link failure, are out of focus in this document.

BRAS SICR in the GE-platform should successful cover the use cases listed in Table 1.

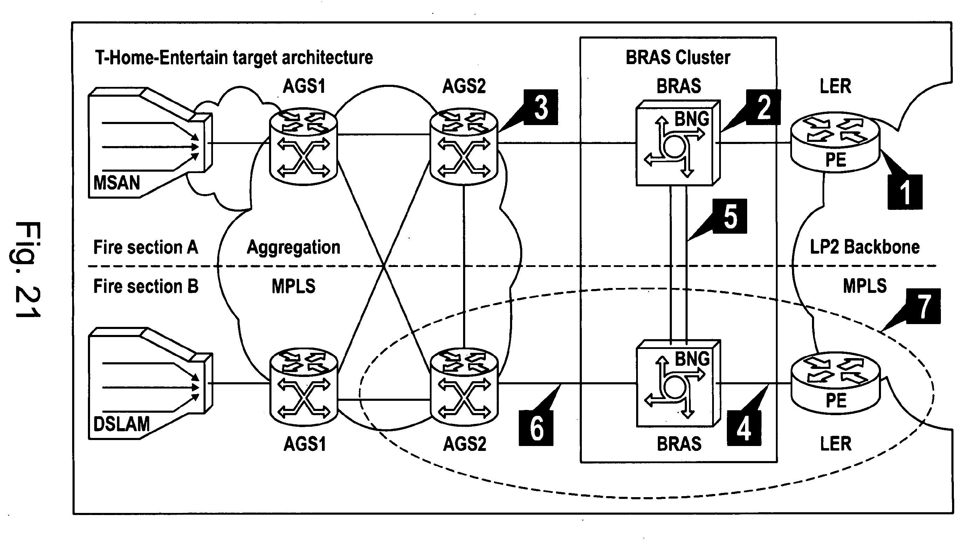

The figure 21 shows different uses cases, the following table Table 1 shows the reference signs of the use cases.
1 System failures LER (PE)
2 (means the outage of a whole system) BRAS (BNG)
3 AGS2 (level two aggregation switch)
4 Link failures LER <--> BRAS
5 BRAS-chassis <--> BRAS-chassis (Cross Link)
6 BRAS <--> AGS2
7 Fire section outage (assuming that each BRAS-chassis of a BRAS-cluster is located at a different fire section)

### BRAS System Failures:

A complete BRAS-chassis failure/outage should trigger a stateful switchover of all active customer sessions terminated at the failed BRAS-chassis. The switchover should occur without or with minimal packet loss. The switchover and the associated session interruption should be less then one second (sub second convergence). Switchover should not trigger a reconnect of the affected PPPoE sessions, meaning that already established customer sessions remain valid (no need for connection reinitialization over the "TCP three-way handshake procedure").

The state of all stateful protocols which use connection states to hold the connection should be synchronized between the BRAS-chassis within the BRAS-cluster.

The following listing gives an overview, which protocols and functionalities should be stateful during switchover:
□ Customer PPPoE Session and access-circuit state
□ PPPoE, PPP, NCP (IPCP and IP6CP)
□ IPv6 RA und DHCPv6-PD
□ RADIUS (authentication and accounting)
□ L2TP (see corresponding chapter)
□ Lawful Interception

### Optional:

□ ANCP TCP-Sessions (see corresponding chapter)

The following listing gives an overview which additional information should be synchronized within a cluster:
□ Access-circuit specific configurations (only in case of a SICR solution without one shared configuration)
□ ANCP Database (see description)
□ SNMP
□ Physical Interface counter
□ Session and Service Accounting

### BRAS Crosslink Failure:

SICR shall be based on a cluster solution which uses dedicated cross links between the individual BRAS-chassis. This crosslink is used to forward traffic and SICR control messages between the chassis. The availability of the crosslink should be as high as possible. That means the crosslink should consist of more than one interfaces located on different line cards. The bandwidth of the crosslink should be scalable for all possible traffic-flow scenarios resulting from failures inside the GE-platform. If a single link out of the crosslink connectivity fails, the link should still be able to forward traffic without packet loss. If the crosslink is used for customer traffic forwarding and BRAS-cluster synchronization over the same link, the traffic used for BRAS-cluster synchronization should be prioritized with the highest priority.

If the crosslink between the BRAS-chassis of the BRAS-cluster fails, each BRAS-chassis will become active for all sessions (split-brain). In this case both BRAS-chassis should negotiate to determine which one takes over all customer sessions and the whole traffic. The other chassis should change the states of all access and backbone interfaces automatically to operational down.

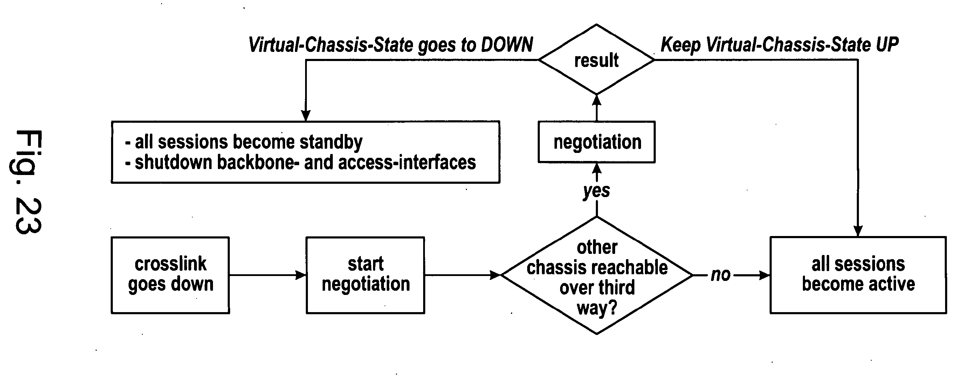

Figure 23 shows the Crosslink Failure Negotiation Process.

Therefore the chassis is only reachable over ZDCN, which is a management network. Thus an additional path (third way) for negotiation is required. In this scenario a dedicated alarm should be triggered and send out, which clearly describes the failure of this link and the loss of the BRAS-cluster functionality. A normal link-failure alarm is not acceptable.

### LER System Failure:

The backbone connection of one BRAS-chassis will terminate only at one LER. That means, each BRAS-chassis is single homed towards one LER. From the cluster point of view, the whole cluster is dual homed because each BRAS-chassis terminates on a different LER.

In case of LER failure, the whole traffic (incoming and outgoing) should be rerouted via the redundant LER. A dynamic routing protocol between the BRAS and LER should not be used. Between BRAS and LER only static routing will be implemented (see chapter Backbone).
The recovery of a LER system failure should not trigger a reconnect of the established PPPoE sessions.

A system failure of one LER should trigger a convergence within the BRAS-cluster and the Backbone. The convergence time should be less then one second (sub second convergence).

### LER Link Failure

The connectivity of one BRAS-chassis towards the LER should be possible using ether-channel (LAG) or ECMP (equal cost multi-path) based on n x 1GE or n x 10GE.

In case of ether-channel (n x 1GE and n x 10GE) it should be possible to enforce a minimum number of active links. There should be a functionality to automatically shut down the ether-channel, if the number of active links falls below a desired and configured minimum value. The LER should trigger a reroute based on the link-down event and route the incoming traffic towards the redundant BRAS-chassis inside the BRAS-cluster architecture.

The outgoing traffic should follow the default-route, which is possibly available via the inter-chassis crosslink. As long as a link to the direct connected LER is active this should be used as the default-route, otherwise the default-route via the other BRAS-chassis becomes active. The active PPPoE sessions should not be switched over to the redundant chassis. If the routing-table contains no active default-route, the described stateful switchover should be triggered.

The link failure-detection within the channel and the rerouting of the default-route should occur with a session interruption of less than one second (sub second convergence). The re-routing should not trigger a reconnect of the PPPoE sessions. AGS2 System Failure

A system failure of an AGS2 (level two aggregation switch) should trigger a stateful switchover from one BRAS-chassis to the other inside the BRAS-cluster. Only the related access-circuits with all PPPoE sessions should be switched over to the redundant BRAS-chassis.

The switchover should be realized with a data-plane user traffic interruption less than one second (sub second convergence). The switchover should not trigger a reconnect of the PPPoE sessions. Like described before, the state of all connection oriented protocols should be switched over stateful. AGS2 Link Failure

Based on the architecture of the aggregation platform, a link-failure towards the AGS2 switch should be handled like described at "AGS2 System Failure". There should be a stateful switchover per link. Only the concerned access-circuits with all PPPoE sessions should be switched over to the redundant link within the Interface-group.

### Fire Section Outage:

An outage of a complete fire section, for example fire section A, should be seen as a combination of BRAS-chassis, LER and AGS2 system failure of fire section A. This should trigger a stateful switchover of all established PPPoE sessions which were previously connected for example to the failed BRAS-chassis at fire section A. All connections of fire section A should be switched over to the BRAS-chassis at fire section B. The traffic should be forwarded to the directly connected LER and AGS2, located at fire section B.

The switchover should be implemented with a data-plane user data interruption of less than one second (sub second convergence). The switchover should not trigger a reconnect of the PPPoE sessions. Like described before, the state of all connection oriented protocols should be switched over stateful.

### List of Abbreviations

- AGS1: level one aggregation switch
- AGS2: level two aggregation switch
- ANCP: Access Node Control Protocol
- ARP: Address Resolution Protocol
- BNG: Broadband Network Gateway
- BRAS: Broadband Remote Access Server (equal to BNG)
- CPE: Customer Premises Equipment
- CVLAN: QinQ inner VLAN
- DSL: Digital Subscriber Line
- DSLAM: Digital Subscriber Line Access Multiplexer
- ECMP: Equal-Cost Multi-Path (load sharing)
- GE: Gigabit-Ethernet
- HG: Home Gateway
- IAD: Integrated Access Device
- KPI: Key Performance Indicator
- MAT: MAC Address Translation
- MC-LAG: Multi-chassis LAG
- MSAN: Multi Service Access Node
- LAG: Link Aggregation Group
- LACP: Link Aggregation Control Protocol
- LER: Label Edge Router (equal to PE Router)
- LSR: Label Switch Router (equal to P router)
- MAC: Media Access Control
- MPLS: Multiprotocol Label Switching
- P Router: Provider Router (MPLS)
- PE Router: Provider Edge Router (MPLS)
- PPP: Point to Point Protocol
- PPPoE: Point to Point Protocol over Ethernet
- PW: Pseudowire (MPLS)
- QinQ: VLAN in VLAN encapsulation (802.1q in 802.1q)
- RADIUS: Remote Authentication Dial-In User Service
- RSHG: Residential Split Horizon Group
- SHG: Split Horizon group
- SICR: Stateful Interchassis Redundancy
- SMAT: Source MAC Address Translation
- SVLAN: QinQ outer VLAN
- THE: T-Home Entertain target architecture
- VLAN: Virtual Local Area Network
- VPLS: Virtual Private LAN Service
- VSI: Virtual Switch Instance

## Claims

1. Virtual Broadband Remote Access Server,BRAS, Cluster comprising:
- at least two BRAS, each of the BRAS comprises a Data Plane, Control Plane, Management Plane;
- wherein a common control plane and a common management plane spans over the at least two BRAS, implementing a redundancy on the Virtual BRAS cluster by providing the functionality of the control and management plane, by controlling and managing the at least two BRAS;
the common control plane and a common management plane being the external access point to the virtual redundant BRAS, wherein in case of a failure of one of the BRAS the common control and common management plane, switchover the functionality to the working BRAS
wherein the BRAS are connected via a crosslink,
wherein in case of a broken crosslink a brain synchronisation Tunnel over labelled Edge Router,LER, is used for communication between the BRAS.

2. Virtual BRAS Cluster according to claim 1, wherein the common management plane and/or common control plane control both BRAS with all or parts of its interfaces and mechanisms, providing logical interface for subscriber management, accounting and/or operational functionalities, which is tighten to both BRAS within the cluster.

3. Virtual BRAS Cluster according to one or more of the claims 1 to 2, being connected to one level 2 aggregation switch, AGS2, to the user side, and one Labelled Edge Router, LER, to the network/backbone side, therefore, BRAS is single-homed but the virtual BRAS-cluster is dual-homed, which establishes redundant connections into the aggregation and backbone area.

4. Virtual BRAS Cluster according to one or more of the claims 1 to 3, wherein the subscribers are connected via PPPoE sessions and in case of a failure of one BRAS the PPPoE sessions are switched over on the network level of the PPPoE sessions without interruption of the PPPoE session.

5. Virtual BRAS Cluster according to one or more of the claims 1 to 4, wherein software modules are running on the two BRAS to implement the common control plane and/or the common management plane, communicating over a crosslink synchronizing the management plane and control plane by using a protocol, exchanging all the subscriber relevant management information and subscriber specific parts of the configuration, comprising one or more of the following information:
- BRAS, slot and port information to the interface within a Link Aggregation Group, LAG,
- authentication ,preferably user-id/username
- assigned IPv4 and IPv6 addresses
- Virtual-State
- State "UP"
- State "DOWN".

6. Virtual BRAS Cluster according to claim 5, wherein the configuration which is needed for access-circuit provisioning or integration of new DSLAM/MSAN is synchronized within the BRAS-cluster.

7. Virtual BRAS Cluster according to one or more of the claims 1 to 6, wherein the BRAS-cluster is identified over one or more, unique IP address, which can be shared inside the cluster.

8. Virtual BRAS Cluster according to one or more of the claims 1 to 7, wherein between AGS2 and BRAS a traffic encapsulation, like QinQ, is used to define the source GE-DSLAM and MSAN as outer VLAN and
the xDSL, GE-DSLAM/MSAN ports as inner VLAN establish an aggregation network.

9. Virtual BRAS Cluster according to claim 8, wherein towards the aggregation network, an interface-group over the BRAS is used, wherein in an interface-group only one port of the data plan is active at a given time, by signalling, LACP, the "up" status on a port the other port is automatically set to operational "down".

10. Virtual BRAS Cluster according to claim 9, wherein the operational "down" port periodically sends out LACP messages, and missing LACP arrival within the configured dead-interval is an indication of physical interface outage.

11. Virtual BRAS Cluster according to claim 8, wherein for stateful switchover, the ports within one interface-group have the same MAC address.

12. Virtual BRAS Cluster according to one or more of the claims 1 to 11, wherein the following types of subscriber sessions are distinguished:
- PPP locally terminated sessions, wherein a stateful recovery of all locally terminated and forwarded PPPoE customer sessions, without loss of access-circuits in case of a failure is provided and therefore without the need for PPPoE session to reconnect,
- PPP forwarded sessions over L2TP, wherein the outgoing L2TP tunnel follows the default-route within the virtual BRAS-cluster, in case of a LER failure, incoming and outgoing traffic is rerouted over the crosslink to the redundant LER.

13. Virtual BRAS Cluster according to one or more of the claims 1 to 12, wherein the loss of AGS2 connectivity forces a switchover of all effected PPPoE sessions sessions locally terminated and sessions forwarded via L2TP to the redundant BRAS.

14. Virtual BRAS Cluster according to one or more of the claims 1 to 13, wherein all relevant Access Node Control Protocol, ANCP, data is synchronized between the BRAS, wherein the ANCP connection is terminated at the Virtual-BRAS-cluster using a virtual or shared IP/MAC address combination, which means that the IP and MAC address is the same for a specific ANCP connection on both BRAS-chassis.

15. Virtual BRAS Cluster according to claim 14, wherein after a switchover a broadcast packet is sent with the source MAC into the L2 aggregation network segment, this process is known as gratuitous ARP,G-ARP, and serves the purpose of MAC-address learning.

16. Virtual BRAS Cluster according to one or more of the claims 1 to 13, wherein the virtual BRAS Cluster is configured to switchover stateful one or more of the following protocols and/or functionalities:
□ Customer PPPoE Session and access-circuit state
□ PPPoE, PPP, NCP, IPCP et IP6CP
□ IPv6 RA and DHCPv6-PD
□ RADIUS
□ L2TP
□ Lawful Interception
□ ANCP TCP-Sessions.

17. Virtual BRAS Cluster according to one or more of the claims 1 to 16, being configured to synchronize within the cluster one of more of the following information:
□ QoS
□ Access-circuit specific configurations ed configuration)
□ ANCP Database (see description)
□ SNMP
□ Physical Interface counter
□ Session and Service Accounting

18. Virtual BRAS Cluster according to one or more of the claims 1 to 7, wherein the redundancy is achieved with both BRAS being active and transporting customer sessions at a given time.

## Patentansprüche

1. Virtueller Breitband-Fernzugangs-Server, BRAS, Cluster umfassen:
- Mindestens zwei BRAS, jeder der BRAS umfasst eine Datenebene, Steuerungsebene, Verwaltungsebene;
- wobei eine gemeinsame Steuerungsebene und eine gemeinsame Verwaltungsebene sich Ober mindestens zwei BRAS erstreckt, Implementierung einer Redundanz auf dem virtuellen BRAS Cluster indem die Funktionalität der Steuerungs- und Verwaltungsebene, durch Steuerung und Verwaltung der mindestens zwei BRAS bereitgestellt wird;
die gemeinsame Steuerungsebene und eine gemeinsame Verwaltungsebene bilden den externen Zugangspunkt auf den virtuelle redundanten BRAS, wobei im Falle eines Ausfalls einer der BRAS die gemeinsame Steuerungs- und Verwaltungsebene, die Funktionalität auf den funktionsfähigen BRAS umschaltet,
wobei die BRAS über eine Querverbindung verbunden sind,
wobei im Fall einer unterbrochenen Querverbindung ein Brain Synchronisations-Tunnel über Labelled Edge-Router, LER, für die Kommunikation zwischen dem BRAS (Fig. 10) verwendet wird.

2. Virtueller BRAS Cluster nach Anspruch 1, wobei die gemeinsame Verwaltungsebene und / oder gemeinsame Steuerungsebene beide BRAS mit allen oder Teile seiner Schnittstellen und Mechanismen steuert, logische Schnittstelle für die Abonnentenverwaltung, Buchhaltung und / oder operative Funktionalitäten bereitgestellt werden, welches zu beiden BRAS innerhalb des Clusters zugeordnet sind.

3. Virtueller BRAS Cluster nach einem oder mehreren der Anspruche 1 bis 2, Verbunden mit einem Stufe 2 Aggregations-Schalter, AGS2, auf der Benutzerseite, und einem labelled Edge-Router, LER, zu der Netzwerk / Backbone Seite, daher ist das BRAS einfach vernetzt, aber der virtuelle BRAS-Cluster ist zweifach vernetzt, was redundante Verbindungen in dem Aggregations- und den Backbone-Bereich schafft.

4. Virtueller BRAS Cluster nach einem oder mehreren der Ansprüche 1 bis 3, wobei die Endgeräteüber PPPoE-Sitzungen verbunden sind und im Falle eines Ausfalls eines BRAS die PPPoE-Sitzungen auf der Netzwerkebene der PPPoE-Sitzungen umgeschaltet werden ohne die PPPoE-Sitzungen zu unterbrechen.

5. Virtueller BRAS Cluster nach einem oder mehreren der Ansprüche 1 bis 4, wobei Software-Module auf den beiden BRAS ausgeführt werden, um die gemeinsame Steuerungsebene und / oder die gemeinsame Verwaltungsebene zu implsmentieran, wobei über eine Querverbindung eine Kommunikation zum Synchronisieren der Verwaltungsebene und Steuerungsebena unter Verwendung eines Protokolls erfolgt, wobei ein Austausch aller Abonnenten betreffenden Verwaltungsinformationen und Abonnentenspezifischen Teile der Konfiguration erfolgt, umfassend eine oder mehrere der folgenden Informationen:
- BRAS, Slot-und Port-Informationen an der Schnittstelle innerhalb einer Link Aggregations Gruppe, LAG,
- Authentifizierung, vorzugsweise user-id/username
- Zugeordnet iPv4-und IPv6-Adressen
- Zwischenzustand
- Zustand "UP"
- Zustand "DOWN".

6. Virtueller BRAS Cluster nach Anspruch 5, wobei die Konfiguration, die für die Zugangsleitungs-Bereitstellung oder Integration neuer DSLAM / MSAN benötigt wird, innerhalb des BRAS-Cluster synchronisiert ist.

7. Virtueller BRAS Cluster nach einem oder mehreren der Ansprüche 1 bis 6, wobei der BRAS Cluster über einen oder mehrere eindeutige IP-Adresse identifiziert wird, die innerhalb des Clusters gemeinsam genutzt werden können.

8. Virtuelle BRAS Cluster nach einem oder mehreren der Ansprüche 1 bis 7, wobei zwischen AGS2 und BRAS eine Verkehrs-Kapselung, wie QinQ, verwendet wird, um die Quelle GE-DSLAM und MSAN als äußeres VLAN zu definieren und die xDSL, GE-DSLAM/MSAN Ports als innere VLAN bilden ein Aggregationsnetzwerk.

9. Virtueller BRAS Cluster nach Anspruch 8, wobei in Richtung des Aggregationsnetzwerks, eine Schnittstellengruppe über den BRAS eingesetzt wird, wobei in einer Schnittstellengruppe nur einen Port der Datenebene zu einem gegebenen Zeitpunkt aktiv ist, indem durch eine Signalisierung, LACP, der "up"-Status auf einen Port gesetzt wird der andere Port wird automatisch auf "down" gesetzt.

10. Virtueller BRAS Cluster nach Anspruch 9, wobei der "down" Port in regelmäßigen Abständen LACP-Nachrichten sendet und fehlende LACP Eingänge innerhalb des konfigurierten toten Intervalls sind ein Indiz für einen physikalischen Schnittstellen-Ausfall.

11. Virtueller BRAS Cluster nach Anspruch 8, wobei für zustandsabhängige Umschaltung, die Ports innerhalb einer Schnittstellengruppe die gleiche MAC-Adresse haben.

12. Virtueller BRAS Cluster nach einem oder mehreren der Ansprüche 1 bis 11, wobei die folgenden Arten von Abonnentensitzungen unterschieden werden:
- PPP lokal terminierte Sitzungen, wobei eine zustandsabhängige-Wiederherstellung aller lokal terminierten und weitergeleitet PPPoE Kundensitzungen, ohne Verlust der Zugangsleitung bei einem Ausfall bereitgestellt wird und daher ohne die Notwendigkeit die PPPoE-Session wiederhergestellt wird,
- PPP weitergeleitete Sitzungen über L2TP, wobei der ausgehende L2TP-Tunnel der Standard Route in dem virtuellen BRAS-Cluster folgt, im Falle eines LER Ausfalls, werden eingehende und ausgehender Datenverkehr über die Querverbindung der redundanten LER umgeleitet.

13. Virtueller BRAS Cluster nach einem oder mehreren der Ansprüche 1 bis 12, wobei der Verlust der AGS2 Konnektivität ein Umschalten aller ausgeführten PPPoE Sitzungen die lokal terminiert sind erzwingt, und Sitzungen werden über L2TP an den redundanten BRAS weiterleitet.

14. Virtueller BRAS Cluster nach einem oder mehreren der Ansprüche 1 bis 13, wobei alle relevanten Zugangspunk-Kontroll-Protokoll-, ANCP, Daten zwischen dem BRAS synchronisiert werden, wobei die ANCP Verbindungen mit dem virtuellen BRAS-Cluster unter Verwendung einer virtuellen oder gemeinsam genutzte IP / MAC-Adressen Kombination terminiert ist, was bedeutet, dass die IP-und MAC-Adresse die gleiche für eine bestimmten ANCP-Verbindung auf beiden BRAS-Chassis ist.

15. Virtuelle BRAS Cluster nach Anspruch 14, wobei nach einer Umschaltung ein Broadcast-Paket mit der QueIhMAC in das L2 Aggregations- Netzwerksegment gesendet wird, dieser Prozess wird als kostenlose ARP, G-ARP, bezeichnet und dient dem Zweck die MAC-Adresse kennen zu lernen.

16. Virtueller BRAS Cluster nach einem oder mehreren der Ansprüche 1 bis 13, wobei der virtuelle BRAS Cluster konfiguriert ist, um zustandsabhängig eine oder mehrere der folgenden Protokolle und / oder Funktionalitäten umzuschalten:
□ Kunden PPPoE-Sitzungen und Zugangsleitung-Zustand
□ PPPoE, PPP, NCP, IPCP und IP6CP
□ IPv6 RA und DHCPv6-PD
□ RADIUS
□ L2TP
□ rechtmäßige Überwachung
□ ANCP TCP-Sitzungen.

17. Virtuelle BRAS Cluster nach einem oder mehreren der Ansprüche 1 bis 16, ist konfiguriert, um innerhalb des Clusters eine oder mehrere der folgenden Informationen zu synchronisieren.:
□ QoS
□ Zugangsleitung spezifische Konfigurationen (ed-Konfiguration)
□ ANCP-Datenbank (siehe Beschreibung)
□ SNMP
□ Physischer Schnittstellen-Zähler
□ Sitzungs- und Service- Buchhaltung

18. Virtueller BRAS Cluster nach einem oder mehreren der Ansprüche 1 bis 7, wobei die Redundanz mit beiden BRAS erreicht wird, wobei beide BRAS aktiv sind und Kundensitzungen zu einem gegebenen Zeitpunkt transportieren.

## Revendications

1. Secteur de Serveur d'accès distant large bande virtuel, BRAS, comprenant :
- au moins deux BRAS, chaque BRAS comprenant un Plan de données, un Plan de commande et un Plan de gestion ;
- dans lequel un plan de commande commun et un plan de gestion commun s'étendent sur au -moins deux BRAS, implémentant une redondance sur le secteur BRAS virtuel en fournissant la fonctionnalité d'un plan de gestion et de commande, par la commande et la gestion des deux BRAS au moins ;
le plan de commande commun et un plan de gestion commun étant le point d'accès externe aux BRAS redondant virtuels, dans lequel lors d'une défaillance de l'un des BRAS les plans de commande commun et de gestion commun commutent la fonctionnalité sur le BRAS opérationnel,
dans lequel les BRAS sont connectés via un lien traversant,
dans lequel en cas de défaillance du lien traversant un tunnel de synchronisation neuronal est utilisé sur des Routeurs de périphérie à étiquette, LER, pour la communication entre les BRAS (Fig. 10).

2. Secteur de BRAS virtuel selon la revendication1, dans lequel le plan de gestion commun et/ou le plan de commande commun commandent les deux BRAS avec tout ou partie de leurs interfaces et mécanismes, fournissant une interface logique pour la gestion d'abonnement, la comptabilité et/ou des fonctionnalités opérationnelles, qui sont reliées aux deux BRAS au sein du secteur.

3. Secteur de BRAS virtuel selon l'une ou plusieurs des revendications 1 à 2, connecté à un commutateur d'agrégation de niveau 2, AGS2, vers le côté utilisateur, et un Routeur de périphérie à étiquette, LER, vers le côté réseau/réseau fédérateur, de telle manière que le BRAS est domicile unique alors que le secteur BRAS virtual est à double domicile, établissant des connections redondantes dans la zone d'agrégation et de réseau fédérateur.

4. Secteur de BRAS virtuel selon l'une ou plusieurs des revendications 1 à 3, dans lequel les abonnés sont connectés via des sessions PPPoE et dans le cas d'un dysfonctionnement sur un BRAS, les sessions PPPoP sont commutés sur le niveau réseau des sessions PPPoP sans interruption de la session PPPoP.

5. Secteur de BRAS virtuel selon l'une ou plusieurs des revendications 1 à 4, dans lequel des modules logiciels s'exécutent sur les deux BRAS pour implémenter le plan de commande commun et/ou le plan de gestion commun, communiquant sur un lien croisé synchronisant le plan de gestion et le plan de commande au moyen d'un protocole, échangeant toute information de gestion propre à l'utilisateur et toutes parties propres à la configuration spécifiques à utilisateur, comprenant une ou plusieurs des informations suivantes :
- des informations relatives aux BRAS, au accès et ports d'interface au sein d'un Groupe d'Aggrégation de Lien, LAG,
- des informations d'authenticité, de préférences identifiant/nom utilisateur
- des adresses Ipv4 et Ipv6 attribuées
- l'Etat-Virtuel
- état « UP »
- état « Down »

6. Secteur de BRAS virtuel selon la revendication 5, dans lequel la configuration qui est requise pour l'accès au circuit ou intégration d'un nouveau DSLAM/MSAN est synchronisée au sein du secteur BRAS.

7. Secteur de BRAS virtuel selon l'une ou plusieurs des revendications 1 à 6, dans lequel le secteur BRAS est identifié sur une ou plusieurs adresses IP unique, qui peuvent être partagées au sein du secteur.

8. Secteur de BRAS virtuel selon l'une ou plusieurs des revendications 1 à 7, dans lequel l'on utilise une encapsulation de trafic, telle que QinQ, entre AGS2 et BRAS pour définir la source GE-DSLAM et MSAN en tant que VLAN externe et les ports xDSL, GE-DSLAM/MSAN en tant que VLAN interne pour établir un réseau d'agrégation.

9. Secteur de BRAS virtuel selon la revendication 8, dans lequel un groupe d'interface sur le BRAS est employé vers le réseau d'agrégation dans lequel, dans un groupe d'interface, un seul port du plan de données et actif à un instant donnée, au moyen d'une signalisation, LACP, de l'état « UP » sur un port tout en fixant automatiquement l'état de l'autre port sur « DOWN ».

10. Secteur de BRAS virtuel selon la revendication 9, dans lequel le port opérationnel « Down » envoie périodiquement des messages LACP, dont les messages LACP manquants au bout d'un intervalle configuré permet d'indiquer un dysfonctionnement de l'interface physique.

11. Secteur de BRAS virtuel selon la revendication 8, dans lequel les ports au sein d'un groupe d'interface présentent la même adresse MAC pour une commutation d'état complète.

12. Secteur de BRAS virtuel selon l'une ou plusieurs des revendications 1 à 11, dans lequel sont distinguées les types suivants de sessions d'abonné :
- des sessions localement achevées PPP, dans lesquelles on fournit une récupération de toutes les sessions de client localement achevées et ré-expédiées PPPoP, sans perte de circuits d'accès en cas de dysfonctionnement, et ainsi sans besoin de session PPPoP pour une re connexion ;
- des sessions ré-expédiées PPP sur L2TP, dans lesquelles le tunnel L2TP sortant suit la route par défaut au sein du secteur BRAS virtuel, dans le cas d'un dysfonctionnement LER, le trafic entrant et sortant étant re- routés sur le lien croisé vers le LER redondant.

13. Secteur de BRAS virtuel selon l'une ou plusieurs des revendications 1 à 12, dans lequel la perte d'une connectivité AGS2 entraîne une commutation de toutes les sessions PPPoE effectives localement achevées et des sessions ré-expédiées via L2TP vers les BRAS redondants.

14. Secteur de BRAS virtuel selon l'une ou plusieurs des revendications 1 à 13, dans lequel toutes les données de protocoles de commande de noeud d'accès pertinents, ANCP, sont synchronisées entre les BRAS, dans lequel la connexion ANCP est achevée au secteur BRAS virtuel au moyen d'une combinaison d'adresse IP/MAC partagées, signifiant que les adresses IP et MAC sont les mêmes pour une connexion ANCP spécifique sur les deux chassis BRAS.

15. Secteur de BRAS virtuel selon la revendication 14, dans lequel à la suite d'une commutation un paquet à diffusion générale est transmis avec la MAC source dans le segment de réseau agrégé L2, ce procédé étant connu pour être un ARP, G-ARP gratuit, et à des fins d'apprentissage d'adresse MAC.

16. Secteur de BRAS virtuel selon l'une ou plusieurs des revendications 1 à 13, dans lequel le secteur BRAS virtuel est configuré pour la commutation complète d'état de l'un ou plusieurs des protocoles et/ou fonctionnalités suivantes :
□ l'état de Session PPPoE Client et de circuit d'accès
□ PPPoE, PPP, NCP, IPCP et IP6CP
□ IPv6 RA et DHCPv6-PD
□ RADIUS
□ L2TP
□ interception réglementaire
□ Sessions TCP ANCP

17. Secteur de BRAS virtuel selon l'une ou plusieurs des revendications 1 à 16, configuré pour la synchronisation de l'une ou plusieurs des informations suivante au sein du secteur :
□ QoS
□ configuration et configurations spécifiques de circuit d'accès
□ base de données ANCP (voir la description)
□ SNMP
□ comptage d'Interface physique
□ interception réglementaire
□ Comptabilité de session et de service

18. Secteur de BRAS virtuel selon l'une ou plusieurs des revendications 1 à 7, dans lequel l'on réalise la redondance avec l'activation des deux BRAS et des sessions de client de transport à un instant défini.
